# EUROPEAN PATENT SPECIFICATION

(11) **EP 4 133 742 B1**
(45) Date of publication and mention of the grant of the patent: **07.05.2025**
(21) Application number: 21715201.6
(22) Date of filing: 23.03.2021
(51) Int. Cl.: H04N 21/845

(54) **METHOD AND APPARATUS FOR ENCAPSULATING REGION RELATED ANNOTATION IN AN IMAGE FILE**
VERFAHREN UND VORRICHTUNG ZUR VERKAPSELUNG VON REGIONSBEZOGENER ANMERKUNG IN EINER BILDDATEI
PROCÉDÉ ET APPAREIL D'ENCAPSULATION D'UNE ANNOTATION LIÉE À UNE RÉGION DANS UN FICHIER IMAGE

(30) Priority: 06.04.2020 GB 202005063; 24.06.2020 GB 202009669; 17.12.2020 GB 202019967
(43) Date of publication of application: 15.02.2023
(73) Proprietor: Canon Kabushiki Kaisha, Tokyo, Tokyo 146-8501 (JP)
(72) Inventor: RUELLAN, Hervé, 35700 Rennes (FR); DENOUAL, Franck, 35190 Saint Domineuc (FR); MAZE, Frédéric, 35850 Langan (FR); FUKADA, Masanori, Tokyo, Tokyo 146-8501 (JP)
(74) Representative: Casalonga
(86) International application number: PCT/EP2021/057355
(87) International publication number: WO 2021/204526

(56) References cited:
- US-A1- 2018 352 219
- ANONYMOUS: "COCO - Common Objects in Context - Data format", 1 August 2019 (2019-08-01), XP055812336, Retrieved from the Internet <URL:https://cocodataset.org/#format-data> [retrieved on 20210609]
- "Advances in Databases and Information Systems", vol. 8693, 1 January 2014, SPRINGER INTERNATIONAL PUBLISHING, Cham, ISBN: 978-3-319-10403-4, article TSUNG-YI LIN ET AL: "Microsoft COCO: Common Objects in Context", pages: 740 - 755, XP055594044, 032682, DOI: 10.1007/978-3-319-10602-1_48

## Description

### FIELD OF THE INVENTION

The present disclosure concerns a method and a device for encapsulation of information related to a region in an image file.

### BACKGROUND OF INVENTION

Modern cameras and image analysis services enable to generate localized metadata for images. Localized metadata are metadata related to a region, a portion, of a media content and not to the whole media content. The media content is typically an image, but it may also be a video content, or a set of images. For example, a camera may generate the focusing region for a photo or detect faces while taking a picture. As another example, a deep-learning system may identify objects inside an image. These localized metadata may be seen as region annotations.

Images captured by a camera or processed by an image analysis service are stored on a storage device like a memory card, for example. The images are typically encoded to reduce the size of data on the storage device. Many encoding standards may be used, like JPEG, AV1, or the more recent HEVC standard.

The HEVC standard defines a profile for the encoding of still images and describes specific tools for compressing single still images or bursts of still images. An extension of the ISO Base Media File Format (ISOBMFF) used for such kind of image data has been proposed for inclusion into the ISO/IEC 23008 standard, in Part 12, under the name: "HEIF" or "High Efficiency Image File Format".

HEIF (High Efficiency Image File Format) is a standard developed by the Moving Picture Experts Group (MPEG) for storage and sharing of images and image sequences.

The MIAF (Multi-Image Application Format) is a standard developed by MPEG into ISO/IEC 23000 standard part 22. The MIAF specification specifies a multimedia application format, the Multi-Image Application Format (MIAF), which enables precise interoperability points for the creation, reading, parsing and decoding of images embedded in the High Efficiency Image File (HEIF) format. The MIAF specification fully conforms to the HEIF format and only defines additional constraints to ensure higher interoperability.

While providing the ability to store documents containing metadata such as EXIF or XMP documents, the HEIF and MIAF file formats do not provide a mechanism adapted to linking annotations to a region of an image. US 2018/352219 discloses a method of encapsulating an encoded bitstream representing one or more images, the encapsulated bitstream comprising a data part and a metadata part. The method comprises: providing image item information identifying a portion of the data part representing a sub-image or an image of a single image and/or a set of single images; providing image description information comprising parameters including display parameters and/or transformation operators relating to one or more images and outputting said bitstream together with said provided information as an encapsulated data file. Said image item information comprises one or more properties including at least part of the image description information dedicated to the considered subimage or single image or set of single images, said image description information being defined in one or more boxes.

### SUMMARY OF THE INVENTION

The present invention has been devised to address one or more of the foregoing concerns.

According to a first aspect of the invention, there is provided a method of encapsulating an image in an ISOBMFF-based media file, the method comprising:
- obtaining an image;
- generating an image item representing the image;
- generating geometry descriptive data describing the geometry of a region of the image;
- generating a region item comprising the geometry descriptive data, the region item being associated with the image item by an item reference information;
- generating at least one annotation data structure comprising data associated with the region of the image, the at least one annotation data structure being associated with the region item;
- generating the media file including the image, the image item, the region item and the at least one annotation data structure wherein the region item is associated with the at least one generated annotation data structure by an association information in an association container.

In an embodiment:
- the association container is an item property association box; and,
- the region item is associated with the at least one generated annotation data structure as item properties.

In an embodiment:
- the association container is an item reference box; and,
- the region item is associated with the at least one generated annotation data structure as items.

In an embodiment:
- the association container is an item reference box; and,
- the region item is associated with a grouping data structure, the grouping data structure referencing the at least one generated annotation data structure as items.

In an embodiment:
- the region item is related to a plurality of regions of the image;
- the geometry descriptive data describes the geometry of each of the plurality of regions of the image; and
- the at least one annotation data structure is associated with at least one region of the plurality of regions of the image.

In an embodiment:
- the at least one annotation data structure is associated with all regions of the plurality of regions of the image.

In an embodiment:
- the geometry of the region of the image is a point, a 3d box or a rectangle or an ellipse or a sphere or a polygon or a polyline.

In an embodiment:
- the geometry of the region of the image is a mask.

In an embodiment:
- data of the mask is comprised in an image item associated with the region item by an item reference information.

In an embodiment:
- at least one region item associated with the image item are grouped, the group is associated with the image item by an item reference information.

In an embodiment:
- a first annotation data structure comprising first data associated with a first region in the image and a second annotation data structure comprising second data associated with a second region in the image are generated, and
- the media file including the first annotation data structure and the second annotation data structure is generated.

In an embodiment:
- first geometry descriptive data of the first region and second geometry descriptive data of the second region are generated,
- a first region item comprising the first geometry descriptive data and a second region item comprising the second geometry descriptive data are generated, and
- the media file including the first region item associated with the first annotation data structure and the second region item associated with the second annotation data structure, is generated.

According to another aspect of the invention, there is provided a method of reading an ISOBMFF-based media file, the method comprising:
- reading a region item comprising geometry descriptive data describing the geometry of a region of an image, the region item being associated with an image item representing the image by an item reference information;
- reading at least one annotation data structure associated with the region item, the at least one annotation data structure comprising data associated with the region of the image;
- reading the associated image item,
wherein the region item is associated with the at least one generated annotation data structure by an association information in an association container.

In an embodiment:
- the association container is an item property association box; and,
- the region item is associated with the at least one generated annotation data structure as item properties.

In an embodiment:
- the association container is an item reference box; and
- the region item is associated with the at least one generated annotation data structure as items.

According to another aspect of the invention, there is provided a computer program product for a programmable apparatus, the computer program product comprising a sequence of instructions for implementing a method according to the invention, when loaded into and executed by the programmable apparatus.

According to another aspect of the invention, there is provided a computer-readable storage medium storing instructions of a computer program for implementing a method according to the invention.

According to another aspect of the invention, there is provided a computer program which upon execution causes the method of the invention to be performed.

According to another aspect of the invention, there is provided a device for encapsulating an image in an ISOBMFF-based media file, the device comprising a processor configured for:
- obtaining an image;
- generating an image item representing the image;
- generating geometry descriptive data describing the geometry of a region of the image;
- generating a region item comprising the geometry descriptive data, the region item being associated with the image item by an item reference information;
- generating at least one annotation data structure comprising data associated with the region of the image, the at least one annotation data structure being associated with the region item;
- generating the media file including the image, the image item, the region item, and the at least one annotation data structure,
wherein the region item is associated with the at least one generated annotation data structure by an association information in an association container.

According to another aspect of the invention, there is provided a device for reading an ISOBMFF-based media file, the device comprising a processor configured for:
- reading a region item comprising geometry descriptive data describing the geometry of a region of the image, the region item being associated with an image item representing the image by an item reference information;
- reading at least one annotation data structure associated with the region item, the at least one annotation data structure comprising data associated with the region of the image;
- reading the associated image item,
wherein the region item is associated with the at least one generated annotation data structure by an association information in an association container.

At least parts of the methods according to the invention may be computer implemented. Accordingly, the present invention may take the form of an entirely hardware embodiment, an entirely software embodiment (including firmware, resident software, microcode, etc.) or an embodiment combining software and hardware aspects that may all generally be referred to herein as a "circuit", "module" or "system". Furthermore, the present invention may take the form of a computer program product embodied in any tangible medium of expression having computer usable program code embodied in the medium.

Since the present invention can be implemented in software, the present invention can be embodied as computer-readable code for provision to a programmable apparatus on any suitable carrier medium. A tangible, non-transitory carrier medium may comprise a storage medium such as a floppy disk, a CD-ROM, a hard disk drive, a magnetic tape device or a solid-state memory device and the like. A transient carrier medium may include a signal such as an electrical signal, an electronic signal, an optical signal, an acoustic signal, a magnetic signal or an electromagnetic signal, e.g., a microwave or RF signal.

### BRIEF DESCRIPTION OF THE DRAWINGS

Embodiments of the invention will now be described, by way of example only, and with reference to the following drawings in which:
**Figure 1** illustrates an example of an HEIF file **101** that contains media data like one or more still images and possibly video or sequence of images;
**Figure 2a** illustrates a high-level view of the invention for associating annotations to a region of an image;
**Figure 2b** illustrates an example of region annotations;
**Figure 3** illustrates a first embodiment of the invention;
**Figure 4** illustrates a second embodiment of the invention;
**Figure 5** illustrates a third embodiment of the invention;
**Figure 6** illustrates the main steps of a process for adding a new region annotation associated with an image item stored in a HEIF file when the region annotation is described by an item property according to embodiments of the invention;
**Figure 7** illustrates the main steps of a process for reading a HEIF file containing region annotations when the region annotations are described by an item property according to embodiments of the invention;
**Figure 8** illustrates a fifth embodiment of the invention;
**Figure 9** illustrates a sixth embodiment of the invention;
**Figure 10** illustrates a seventh embodiment of the invention;
**Figure 11** illustrates the main steps of a process for adding a new region annotation to an image item stored in a HEIF file when the region annotation is described by an item according to embodiments of the invention;
**Figure 12** illustrates the main steps of a process for reading a HEIF file containing region annotations when the region annotations are described by an item according to embodiments of the invention;
**Figure 13** illustrates the main steps of a process for reading a HEIF file containing region annotations when the region annotations are described by an item according to the sixth embodiment;
**Figure 14** illustrates a process for processing a HEIF file containing an image and one or more region annotation items associated with this image according to embodiments of the invention;
**Figure 15** is a schematic block diagram of a computing device for implementation of one or more embodiments of the invention.

### DETAILED DESCRIPTION OF THE INVENTION

The HEVC standard defines a profile for the encoding of still images and describes specific tools for compressing single still images or bursts of still images. An extension of the ISO Base Media File Format (ISOBMFF) used for such kind of image data has been proposed for inclusion into the ISO/IEC 23008 standard, in Part 12, under the name: "HEIF" or "High Efficiency Image File Format".

The HEIF and MIAF standards cover two forms of storage corresponding to different use cases:
- the storage of image sequences, which can be indicated to be displayed as a timed sequence or by other means, and in which the images may be dependent on other images, and
- the storage of a single coded image or a collection of independently coded images, possibly with derived images.

In the first case, the encapsulation is close to the encapsulation of the video tracks in the ISO Base Media File Format (see document « Information technology - Coding of audiovisual objects - Part 12: ISO base media file format», w18855, ISO/IEC 14496-12, Sixth edition, October 2019), and similar tools and concepts are used, such as the 'trak' boxes and the sample grouping for description of groups of samples. The 'trak' box is a file format box that contains sub boxes for describing a track, that is to say, a timed sequence of related samples.

Boxes, also called containers, are data structures provided to describe the data in the files. Boxes are object-oriented building blocks defined by a unique type identifier (typically a four-character code, also noted FourCC or 4CC) and a length. All data in a file (media data and metadata describing the media data) is contained in boxes. There is no other data within the file. File-level boxes are boxes that are not contained in other boxes.

In the second case, a set of ISOBMFF boxes, the 'meta' boxes are used. These boxes and their hierarchy offer fewer description tools than the 'track-related' boxes ('trak' box hierarchy) and relate to "information items" or "items" instead of related samples. It is to be noted that the wording 'box' and the wording 'container' may be both used with the same meaning to refer to data structures that contain metadata describing the organization or/and properties of the image data in the file.

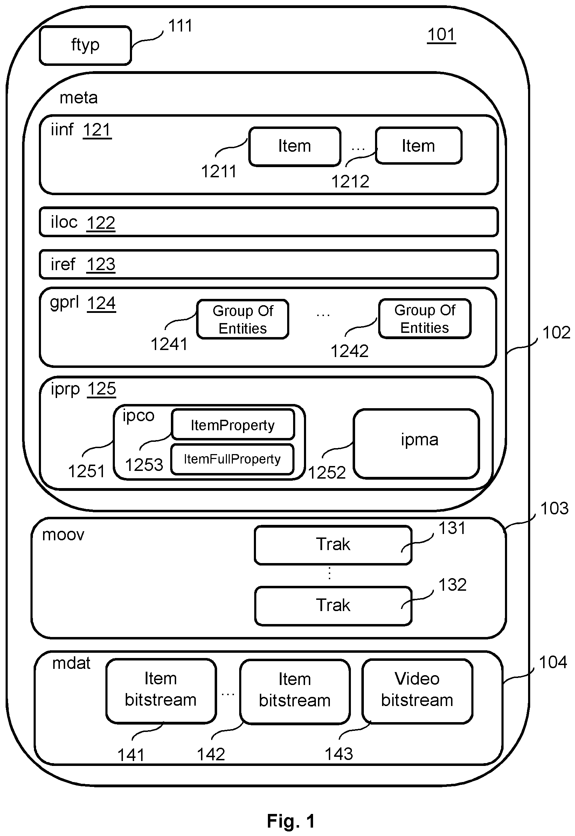

**Figure 1** illustrates an example of a HEIF file **101** that contains media data like one or more still images and possibly one or more video and/or one or more sequences of images. This file contains a first 'ftyp' box (FileTypeBox) **111** that contains an identifier of the type of file (typically a set of four character codes). This file contains a second box called 'meta' (MetaBox) **102** that is used to contain general untimed metadata including metadata structures describing the one or more still images. This 'meta' box **102** contains an 'iinf' box (ItemInfoBox) **121** that describes several single images. Each single image is described by a metadata structure ItemInfoEntry also denoted items **1211** and **1212.** Each item has a unique 16-bit or 32-bit identifier item_ID. The media data corresponding to these items is stored in the container for media data, the 'mdat' box **104.** An 'iloc' box (ItemLocationBox) **122** provides for each item the offset and length of its associated media data in the 'mdat' box **104.** An 'iref' box (ItemReferenceBox) **123** may also be defined to describe the association of one item with other items via typed references.

Optionally, for describing the storage of image sequences or video, the HEIF file **101** may contain a third box called 'moov' (MovieBox) **103** that describes one or more image sequences or video tracks **131** and **132.** Typically, the track **131** may be an image sequence ('pict') track designed to describe a set of images for which the temporal information is not necessarily meaningful and **132** may be a video ('vide') track designed to describe video content. Both tracks describe a series of image samples, an image sample being a set of pixels captured at the same time, for example a frame of a video sequence. The main difference between the two tracks is that in 'pict' tracks the timing information is not necessarily meaningful whereas for 'vide' tracks the timing information is intended to constraint the timing of the display of the samples. The data corresponding to these samples is stored in the container for media data, the 'mdat' box **104.**

The 'mdat' container **104** stores the untimed encoded images corresponding to items as represented by the data portions **141** and **142** and the timed encoded images corresponding to samples as represented by the data portion **143.**

An HEIF file **101** offers different alternatives to store multiple images. For instance, it may store the multiple images either as items or as a track of samples that can be a 'pict' track or a 'vide' track. The actual choice is typically made by the application or device generating the file according to the type of images and the contemplated usage of the file.

The ISO Base Media File Format specifies several alternatives to group samples or items depending on the container that holds the samples or items to group. These alternatives can be considered as grouping data structures or grouping mechanism, i.e., boxes or data structures providing metadata describing a grouping criterion and/or group properties and/or group entities.

A first grouping mechanism represented by an EntityToGroupBox is adapted for the grouping of items or tracks. In this mechanism, the wording 'entity' is used to refer to items or tracks or other EntityToGroupBoxes. This mechanism specifies the grouping of entities. An EntityToGroupBox is defined according to the following syntax:

```
 aligned(8) class EntityToGroupBox(grouping_type, version, flags)
 extends FullBox(grouping_type, version, flags) {
   unsigned int(32) group_id;
   unsigned int(32) num_entities_in_group;
   for(i=0; i<num_entities_in_group; i++)
      unsigned int(32) entity_id;
 // the remaining data may be specified for a particular grouping_type
 }
```

The grouping_type is used to specify the type of the group. Several values for the grouping_type are specified in HEIF. The group_id provides an identifier for the group of entities. The entity_id represents the identifier of entities that compose the group, i.e., either a track_ID for a track, an item_ID for an item or another group_id for an entity group. In **Figure 1****,** the groups of entities inheriting from the EntityToGroup box **1241** and **1242** are comprised in the container **124** identified by the four characters code 'gprl' for GroupsListBox.

Entity grouping consists in associating a grouping type which identifies the reason of the grouping of a set of items, tracks or other entity groups. In this document, it is referred to Grouping Information as information in one of the EntityToGroup Boxes which convey information to group a set of images.

ISOBMFF provides a mechanism to describe and associate properties with items. These properties are called item properties. The ItemPropertiesBox 'iprp' **125** enables the association of any item with an ordered set of item properties. The ItemPropertiesBox consists of two parts: an item property container box 'ipco' **1251** that contains an implicitly indexed list of item properties **1253,** and an item property association box 'ipma' **1252** that contains one or more entries. Each entry in the item property association box associates an item with its item properties. The HEIF standard extends this mechanism to enable the association of item properties with items and/or entity groups. Note that in the description, for genericity, we generally use item properties to designate both properties of an item or properties of an entity group. An item property associated with an entity group applies to the entity group as a whole and not individually to each entity within the group.

The associated syntax is as follows:

```
 aligned(8) class ItemProperty(property_type)
   extends Box(property_type)
 {
 }
 aligned(8) class ItemFullProperty(property_type, version, flags)
   extends FullBox(property_type, version, flags)
 {
 }
 aligned(8) class ItemPropertyContainerBox
   extends Box('ipco')
 {
   properties ItemProperty() []; // boxes derived from
      // ItemProperty or ItemFullProperty, to fill box
 }
 aligned(8) class ItemPropertyAssociation
   extends FullBox('ipma', version, flags)
 {
 unsigned int(32) entry_count;
   for(i = 0; i < entry_count; i++) {
      if (version < 1)
          unsigned int(16) item_ID;
      else
          unsigned int(32) item_ID;
      unsigned int(8) association_count;
      for (i=0; i<association_count; i++) {
          bit(1) essential;
          if (flags & 1)
              unsigned int(15) property_index;
          else
              unsigned int(7) property_index;
      }
   }
 }
 aligned(8) class ItemPropertiesBox
      extends Box('iprp') {
   ItemPropertyContainerBox property_container;
   ItemPropertyAssociation association[];
 }
```

The ItemProperty and Item Full Property boxes are designed for the description of an item property. Item Full Property allows defining several versions of the syntax of the box and may contain one or more parameters whose presence is conditioned by either the version or the flags parameter.

The ItemPropertyContainerBox is designed for describing a set of item properties as an array of Item Property boxes or Item Full Property boxes.

The ItemPropertyAssociation box is designed to describe the association between items and/or entity groups and their item properties. It provides the description of a list of item identifiers and/or entity group identifiers, each identifier (item_ID) being associated with a list of item property index referring to an item property in the ItemPropertyContainerBox.

None of these mechanisms allow describing some properties associated with a portion, or a region of an image. The invention aims at solving this problem by providing ways of describing region annotations and to associate these region annotations with actual regions of an image.

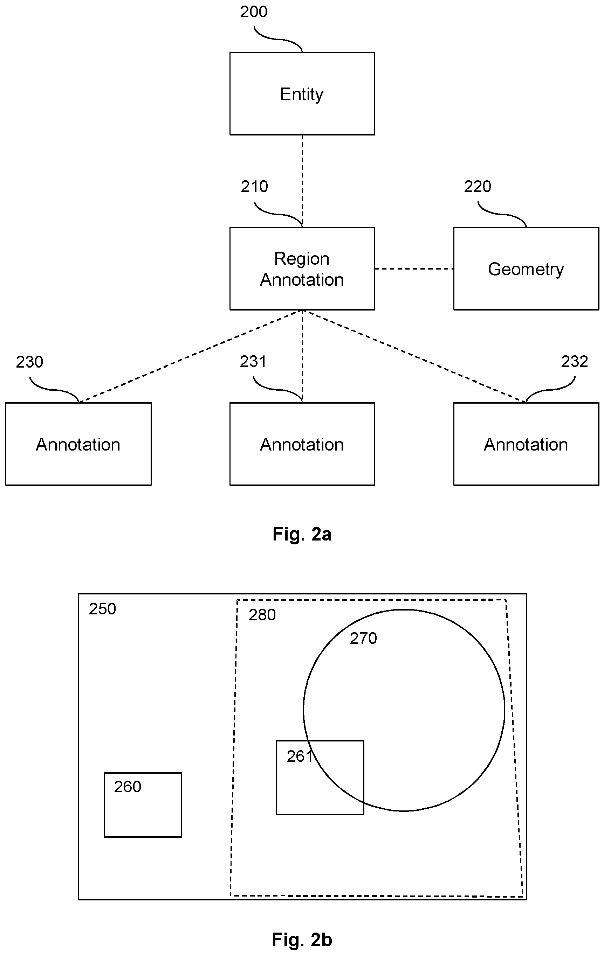

**Figure 2a** illustrates a high-level view of the invention for associating annotations to a region of an image. A region annotation **210** is associated with an entity **200.** This entity is for example an image item (e.g., a coded image item or a derived image item) that describes an image. It can also be any type of item or an entity group. This association means that the region annotation **210** comprises information related to a region, meaning a portion, of the media content, image, or entity group, described by the entity **200.**

When the entity is an image item, the reconstructed image is the image resulting from decoding a coded image item or from applying the operation of a derived image item to a set of input images (that are themselves coded image items or derived image items). The output image is the image resulting from applying the potential transformative item properties of the image item to the reconstructed image. For example, the output image can be the image obtained after decoding the data associated with the item and applying transformative item properties on the decoded image. Transformative item properties include for example the 'irot' transformative item property that rotates the image, the 'clap' transformative item property that crops the image, or the 'imir' transformative item property that mirrors the image. The reconstructed image of entity 200 is the annotated image onto which the region annotation **210** applies, meaning that the region is a portion of the reconstructed image.

This region annotation **210** may be defined by its geometry **220.** The geometry may be defined as a location, a location and a shape, a set of points or as a mask. For example, the geometry of a region may be a rectangle defined by its top-left corner and its width and height. For example, a set of points may represent a polygon defined by the coordinates of all its vertices. The geometry may be defined by other means. The geometry may be split into a location and optionally a shape. Several kinds of shapes can be defined: for example a point (in such case the geometry is only a location), a rectangle, or a circle. The location is the position on the annotated image of a reference point for the shape. For example, the reference point may be the top-left corner of a rectangle, the center of a circle... The geometry can also be defined as a mask, selecting individual pixels in the image corresponding to the entity **200.** Other geometries can also be used, such as a 3D box projected onto the image plane. The geometry may be described with one generic identifier plus a parameter providing its type (point, rectangle, circle...) or as a specific identifier per type. For an image encapsulated within a HEIF file, this identifier may be a four-character code.

The region annotation **210** may be linked to one or more annotations **230, 231,** and **232.** These annotations are used to store different annotations corresponding to the region **210** of the entity **200.** An annotation can be for example the focus location of the picture, a face detected in the image, an object detected in the image, a GPS location corresponding to an object in the image, a description for a part of the image, the text contained in a region of the image, a user annotation for a part of the image, or any kind of information associated with the region.

**Figure 2b** illustrates an example of region annotations. The image **250** is for example captured by a camera. The camera adds, at capture time, information about two human faces that were detected. The faces correspond to the regions **260** and **261** in the image **250.** Both regions are rectangular regions. This captured image may be stored in a HEIF file using the invention.

Later on, for example while transferring the image **250** into an online-based photo storage, further processing is applied on the image, enhancing the information describing the image. First, a recognition algorithm finds the name of the person whose face is in region **261.** Second, an object detection algorithm detects and identifies a building in the region **270** of the image **250.** This region is a circular region. These processing steps result in an annotated image that may be stored in a HEIF file using the invention. For example, the HEIF file containing the image **250** is edited so as to store the description of the new region annotations **270** and/or the name of the detected person in the region **261.**

Last, a user edits the image **250,** for example to keep only the part containing the known person in region **261** and the building in region **270.** She also corrects the perspective distortion. As a result, only the part **280** of the image **250** is kept. Due to the perspective correction, this part **280** is not rectangular. These editing steps result in an edited image that may be stored in a HEIF file using the invention. The so-edited HEIF file may then contain either the original image **250** plus the instruction to obtain the cropped image **280,** or it may contain only the image description and data for the region **280.**

In the different embodiments, the geometry **220** of a region annotation may be represented using the following structure:

```
 aligned(8) class Geometry() {
   unsigned int(1) flag;
   unsigned int(7) type;
   unsigned int field_size = (flag + 1) * 16;
   if (type == 0) {
      // point
      unsigned int(field_size) x;
      unsigned int(field_size) y;
   }
   else if (type == 1) {
      // rectangle
      unsigned int(field_size) x;
      unsigned int(field_size) y;
      unsigned int(field_size) width;
      unsigned int(field_size) height;
   }
   else if (type == 2) {
      // circle
      unsigned int(field_size) x;
      unsigned int(field_size) y;
      unsigned int(field_size) radius;
   }
   else if (type == 3) {
      // polygon
      unsigned int(8) point_count;
      int i;
      for (i=0; i < point_count; i++) {
          unsigned int(field_size) x;
          unsigned int(field_size) y;
      }
   }
   else if (type == 4) {
      // 3d box
      unsigned int(field_size) x_bottom_0;
      unsigned int(field_size) y_bottom_0;
      unsigned int(field_size) x_bottom_1;
      unsigned int(field_size) y_bottom_1;
      unsigned int(field_size) x_bottom_2;
      unsigned int(field_size) y_bottom_2;
      unsigned int(field_size) x_bottom_3;
      unsigned int(field_size) y_bottom_3;
      unsigned int(field_size) x_top_0;
      unsigned int(field_size) y_top_0;
      unsigned int(field_size) x_top_1;
      unsigned int(field_size) y_top_1;
      unsigned int(field_size) x_top_2;
      unsigned int(field_size) y_top_2;
      unsigned int(field_size) x_top_3;
      unsigned int(field_size) y_top_3;
   }
   else if (type == 5) {
      // bit-mask
      unsigned int(field_size) ox;
      unsigned int(field_size) oy;
      unsigned int(field_size) mask_item_ID;
   }
   else if (type == 6) {
      // colored mask
      unsigned int(field_size) ox;
      unsigned int(field_size) oy;
      unsigned int(32) mask_color;
      unsigned int(field_size) mask_item_ID;
   }
 }
```

The semantics of this structure may be:
- type is an integer value specifying the type of the geometry.
- field_size is an integer value specifying the size in bits (for example 16 or 32 bits) of the fields used for describing the geometry.
- If the geometry is a point, x and y are the coordinates of this point in the image.
- If the geometry is a rectangle, x and y are the coordinates of the top-left corner of the rectangle and width and height are the width and height of the rectangle.
- If the geometry is a circle, x and y are the coordinates of the center of the circle and radius is the radius of the circle.
- If the geometry is a polygon, point_count is the number of points in the polygon and for each point, x and y are the coordinates of this point in the image. The polygon is a closed polygon.
- If the geometry is a 3d box, then x_bottom_0, y_bottom_0, ..., x_bottom_3, y_bottom_3 are the coordinates of the bottom rectangle of the 3d box. x_top_0, y_top_0, ..., x_top_3, y_top_3 are the coordinates of the top rectangle of the 3d box.
- If the geometry is a bit-mask or a color mask, ox and oy define the location of the top-left pixel of the image mask inside the annotated image. mask_item_ID is the identifier of an image item describing the mask image defining the region. The output image of this image item is the mask image for the region. Preferably, the size of the mask image is the same as or smaller than the size of the annotated image.
- If the geometry is a bit-mask, its mask image is preferably a black and white image (i.e., an image with a 1-bit color component). The region is defined as all the pixels with a black value in the mask image and its top-left corner is located at the position defined by ox and oy.
- If the geometry is a color mask, mask_color defines the color used to define the region in the mask image. The region is defined as all the pixels in the mask image whose color value is the value of the mask_color. The top-left corner of the region is located at the position defined by ox and oy.

In a different example, the geometry of the region may also be split into two structures corresponding to its location and to its shape:

```
 aligned(8) class Location() {
   unsigned int(1) flags;
   unsigned int(7) reserved;
   unsigned int field_size = (flags + 1) * 16;
   unsigned int(field_size) x;
   unsigned int(field_size) y;
   }
   aligned(8) class Shape() {
   unsigned int(1) flag;
   unsigned int(7) type;
   unsigned int field_size = (flag + 1) * 16;
   if (type == 0) {
      // point
   }
   else if (type == 1) {
      // rectangle
      unsigned int(field_size) width;
      unsigned int(field_size) height;
   }
   else if (type == 2) {
      // circle
      unsigned int(field_size) radius;
   }
   else if (type == 3) {
      // polygon
      unsigned int(8) point_count;
      int i;
      for (i=0; i < point_count; i++) {
          int(field_size) dx;
          int(field_size) dy;
      }
   }
   else if (type == 4) {
      // 3d box
      int(field_size) dx_bottom_1;
      int(field_size) dy_bottom_1;
      int(field_size) dx_bottom_2;
      int(field_size) dy_bottom_2;
      int(field_size) dx_bottom_3;
      int(field_size) dy_bottom_3;
      int(field_size) dx_top_0;
      int(field_size) dy_top_0;
      int(field_size) dx_top_1;
      int(field_size) dy_top_1;
      int(field_size) dx_top_2;
      int(field_size) dy_top_2;
      int(field_size) dx_top_3;
      int(field_size) dy_top_3;
   }
   else if (type == 5) {
      // bit-mask
      unsigned int(field_size) mask_item_ID;
   }
   else if (type == 6) {
      // colored mask
      unsigned int(32) mask_color;
      unsigned int(field_size) mask_item_ID;
```

The semantics of the Location structure in this example may be:
- field_size is an integer value specifying the size in bits (for example 16 or 32 bits) of the fields used for describing the Location.
- x and y are the coordinates of the region in the image.

The semantics of the Shape structure are similar to those of the Geometry structure with the following changes:
- For all the shapes, the position on the annotated image of the reference point of the shape is specified by the location.
- If the shape is a point, the reference point is the point itself.
- If the shape is a rectangle, the reference point is its top-left corner.
- If the shape is a circle, the reference point is its center.
- If the shape is a polygon, the first point is the reference point. For the other points, dx and dy are the relative coordinates of the point in reference to the reference point.
- If the geometry is a 3d box, the first point of the bottom rectangle is the reference point. All the other points are specified using relative coordinates in reference to the reference point.
- If the geometry is a bit-mask or a colored mask, the location specifies the position of the top-left pixel of the image mask inside the annotated image.

In some embodiments, the points for the polygon shape and/or the 3d box shape are not specified using relative coordinates but using absolute coordinates.

The units used for defining coordinates, width, height, radius in the geometry may be in pixels or luma samples as integer values or fixed-point 16.16 values. It may be a different unit. Possibly the units used may be specified in the geometry, the location, and/or the shape structure.

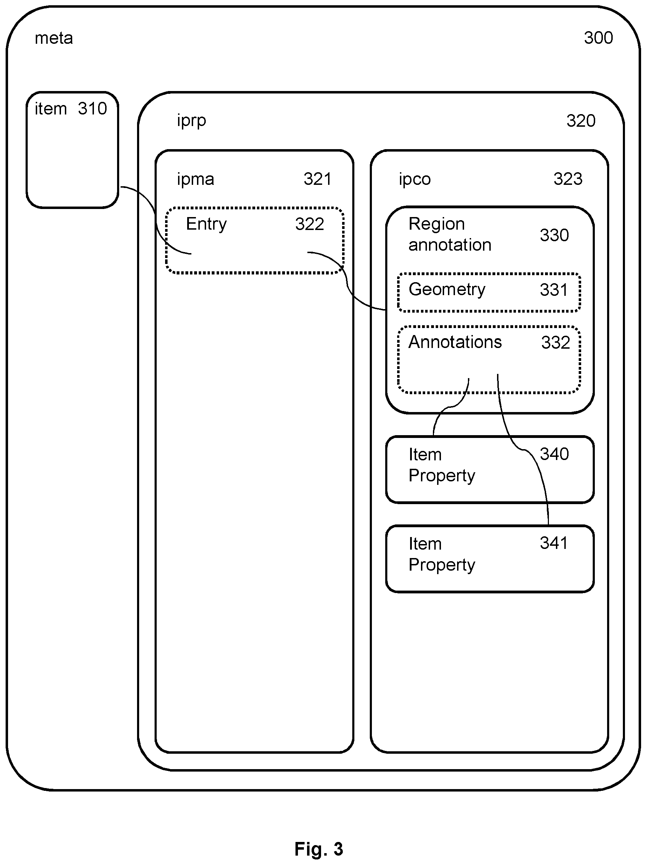

**Figures 3 to 7** illustrate some embodiments of the invention for the HEIF or MIAF standards, where the region annotation **210** is represented using an item property **330.**

**Figure 3** illustrates a first embodiment of the invention. The 'meta' box **300** comprises an 'item' **310,** corresponding for example to an image item. The 'meta' box **300** also comprises an 'iprp' box **320** that itself comprises two boxes. First, an 'ipco' box **323** comprises the item properties of the different entities present in the 'meta' box. Second, an 'ipma' box **321** comprises the association between item properties and entities (e.g., image items or entity groups).

The 'ipco' box **323** comprises a first item property, the region annotation **330.** This region annotation comprises two parts: first the description of its geometry **331,** and second the links **332** to the annotations for the region. These links associate the item properties **340** and **341** with the region.

The 'ipma' box **321** associates the region annotation **330** with the item **310** through its entry **322.**

In this embodiment, the region annotation is an item property that may be defined as follows:
- Box type: 'rgan'
- Property type: Descriptive item property
- Container: ItemPropertyContainerBox
- Mandatory (per item): No
- Quantity (per item): Zero or more

The syntax of the region annotation item property may be:

```
 aligned(8) class RegionAnnotationProperty
 extends ItemFullProperty('rgan', version = 0, flags = 0) {
   Geometry geometry;
   unsigned int(1) flag;
   unsigned int(15) entry_count;
   for (i=0; i < entry_count; i++) {
      if (flag)
          unsigned int(16) property_index;
      else
          unsigned int(8) property_index;
```

The semantics of the region annotation item property may be:
- geometry is the geometry structure of the region. A variant may describe the geometry **331** as a Location structure and optionally a Shape structure.
- entry_count is the number of item properties **(340, 341...)** associated with the region.
- property_index is either 0 indicating that no property is associated, or is the 1-based index of the associated property box in the ItemPropertyContainerBox.

In this embodiment, all the item properties associated by their property_index to the region inside the region annotation item property **330** apply to the region of the annotated image defined by the geometry **331.**

In this embodiment, the annotated image **250** from **Figure 2b** may be stored in a HEIF file with the following structure:

```
 FileTypeBox 'ftyp': major-brand = 'heic', compatible-brands = 'heic'
 MetaBox 'meta': (container)
 HandlerBox 'hdlr': 'pict'
 PrimaryItemBox 'pitm': item_ID = 1;
 ItemInfoBox 'iinf': entry_count = 1
 'infe': item_ID = 1, item_type = 'hvc1'; // (ref 250)
 ItemLocationBox 'iloc': item_count = 1
 item_ID = 1, extent_count = 1, extent_offset = X, extent_length = Y;
 ItemPropertiesBox 'iprp':
 ItemPropertyContainerBox 'ipco':
   1) 'hvcC' // Config for annotated image
   2) 'ispe' // Size of annotated image
   3) 'rgan' // (ref 260)
       geometry: type = 1, x = x0, y = y0, width = w0, height = h0;
       entry_count = 1
          property_index = 6;
   4) 'rgan' // (ref 261)
       geometry: type = 1, x = x1, y = y1, width = w1, height = h1;
       entry_count = 2
          property_index = 6;
          property_index = 7;
   5) 'rgan' // (ref 270)
       geometry: type = 2, x = x2, y = y2, radius = r2;
       entry_count = 1
          property_index = 8;
   6) 'udes', lang = en, name = 'face', description = ' ' , tags = face
   7) 'udes', lang = fr, name = 'Jean', description = ' ' , tags =
   person
   8) 'udes', lang = fr, name = 'Notre-Dame', description = 'Notre-
   Dame de Paris', tags = building
   ItemPropertyAssociation 'ipma': entry_count = 1
   1) item_ID = 1, association_count = 5
       essential = 1, property_index = 1;
       essential = 0, property_index = 2;
       essential = 0, property_index = 3;
       essential = 0, property_index = 4;
       essential = 0, property_index = 5;
       MediaDataBox 'mdat' or 'idat':
       HEVC Image (at file offset X, with length Y)
```

It is to be noted that in this description of the structure of this HEIF file, as well as in the description of the structure of other HEIF files hereafter, parts not necessary to the understanding of the invention are omitted. For example, the version fields of the 'meta' box and of the 'iinf' box are omitted, the item_name field of the 'infe' box is also omitted.

In this HEIF file, the image item **250** is represented by the item with an item_ID value of 1. The region **260** is represented by the item property at index 3 and is associated with the item property at index 6 corresponding to a face annotation. The region **261** is represented by the item property at index 4 and is associated with the item properties at index 6 and 7, corresponding respectively to a face annotation and to an annotation describing a person named "Jean". The region **270** is represented by the item property at index 5 and is associated with the item property at index 8 corresponding to an annotation describing "Notre-Dame de Paris" as a building.

In this HEIF file, the association between a region and its item properties is described inside the 'rgan' item property representing the region.

In a first variant of this first embodiment, the syntax of the region annotation item property **330** may be:

```
 aligned(8) class RegionAnnotationProperty
 extends ItemFullProperty('rgan', version = 0, flags = 0) {
   unsigned int(8) region_count;
   for (r=0; r < region_count; r++) {
      Geometry geometry;
      unsigned int(1) flag;
      unsigned int(15) entry_count;
      for (i=0; i < entry_count; i++) {
          if (flag)
              unsigned int(16) property_index;
          else
              unsigned int(8) property_index;
      }
   }
 }
```

This first variant enables to define several regions with their respective associated item properties in a single region annotation **330** item property.

In a second variant to this embodiment, the syntax of the region annotation item property **330** may be:

```
 aligned(8) class RegionAnnotationProperty
 extends ItemFullProperty('rgan', version = 0, flags = 0) {
   unsigned int(8) region_count;
   for (r=0; r < region_count; r++) {
      Geometry geometry;
   }
   unsigned int(1) flag;
   unsigned int(15) entry_count;
   for (i=0; i < entry_count; i++) {
      if (flag)
          unsigned int(16) property_index;
      else
          unsigned int(8) property_index;
   }
 }
```

This second variant enables to define several regions sharing a set of associated item properties in a single region annotation item property **330.**

The first and second variant may be combined to enable to define multiple sets of regions sharing a set of associated item properties in a single region annotation item property.

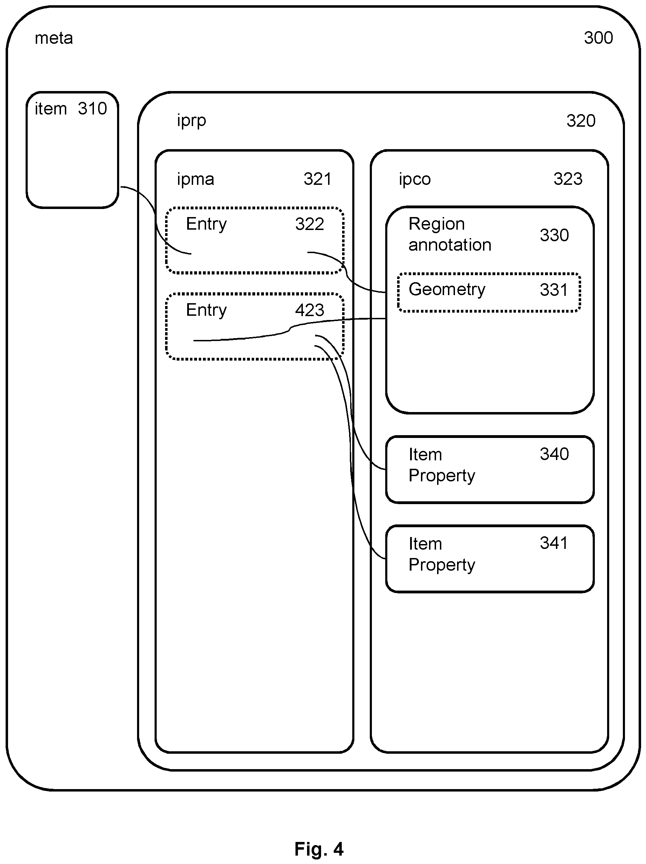

**Figure 4** illustrates a second embodiment of the invention. This embodiment is similar to the first embodiment except for the association between the region annotation item property **330** and its item properties **(340, 341).** In this embodiment, the association is realized through the 'ipma' box **321.** This 'ipma' box contains a new entry **423** associating the region annotation **330** and the item properties **340** and **341.**

In this embodiment, the syntax of the region annotation item property **330** may be:

```
 aligned(8) class RegionAnnotationProperty
 extends ItemFullProperty('rgan', version = 0, flags = 0) {
   Geometry geometry; // (ref 331)
   }
   
```

The syntax of the region annotation may also be:

```
 aligned(8) class RegionAnnotationProperty
 extends ItemFullProperty('rgan', version = 0, flags = 0) {
   unsigned int(8) region_count;
   for (r=0; r < region_count; r++) {
      Geometry geometry; // (ref 331)
   }
 }
```

As in the first embodiment, the geometry may be described as a Location structure and optionally a Shape structure.

To enable the association of item properties with a region annotation item property, the syntax of the 'ipma' box may be:

```
 aligned(8) class ItemPropertyAssociation
   extends FullBox('ipma', version, flags)
   {
   // Entity association loop
   unsigned int(32) entry_count;
   for (i = 0; i < entry_count; i++) {
      if ((version == 0) | | (version == 2))
          unsigned int(16) item_ID;
      else
          unsigned int(32) item_ID;
      unsigned int(8) association_count;
      for (j = 0; j < association_count; j++) {
          bit(1) essential;
          if (flags & 1)
              unsigned int(15) property_index;
          else
              unsigned int(7) property_index;
      }
   }
   if (version >= 2) {
      // Region annotation association loop
      unsigned int(32) region_count;
      for (i = 0; i < region_count; i++) {
          if (flags & 2)
              unsigned int(16) from_property_index;
          else
              unsigned int(8) from_property_index;
          unsigned int(8) association_count;
          for (j = 0; j < association_count; j++) {
              if (flags & 2)
                 unsigned int(16) to_property_index;
              else
                 unsigned int(8) to_property_index;
          }
      }
   }
   }
```

The semantics of the region annotation association loop of the 'ipma' box may be:
- region_count is the number of region annotation item properties for which associations are defined in the 'ipma' box. Possibly this number may be encoded on 8 or 16 bits. Possibly a limit to the number of region annotation item properties present in a HEIF file may be specified.
- from_property_index is the 1-based index of a region annotation item property box with which item properties are associated.
- association_count is the number of item properties associated with the region annotation item property box.
- to_property_index is the 1-based index of an item property box associated with the region annotation item property box. The value of the to_property_index field may be constrained to be different from the value of the from_property_index field.

To keep a backward compatibility with existing HEIF files and implementations, two new versions of the 'ipma' box may be defined. These new versions, numbered 2 and 3 both contain associations between regions and their item properties. These versions differ in the size of the item_ID field.

The index of a region annotation item property box should appear only once as the value of the from_property_index field in the 'ipma' box. An index in the ipco corresponding to a region annotation item property box should not appear as the value of the to_property_index field in the 'ipma' box.

The second bit of the flags field of the box is used to define the size of the from_property_index and the to_property_index fields in the region annotation association loop. Possibly the first bit of the flags field could be used instead to have the same size for the from_property_index, the to_property_index, and the property_index fields. Possibly different bits could be used to enable different sizes for the from_property_index and for the to_property_index fields.

In this second embodiment, the annotated image from **Figure 2b** may be stored in a HEIF file with the following structure:

```
 FileTypeBox 'ftyp': major-brand = 'heic', compatible-brands = 'heic'
 MetaBox 'meta': (container)
   HandlerBox 'hdlr': 'pict'
   PrimaryItemBox 'pitm': item_ID = 1;
   ItemInfoBox 'iinf': entry_count = 1
       'infe': item_ID = 1, item_type = 'hvc1'; // (ref 250)
   ItemLocationBox 'iloc': item _count = 1
      item_ID = 1, extent_count = 1, extent_offset = X,
      extent_length = Y;
   ItemReferenceBox 'iref':
   ItemPropertiesBox 'iprp':
      ItemPropertyContainerBox 'ipco':
          1) 'hvcC' // Config for annotated image
          2) 'ispe' // Size of annotated image
          3) 'rgan' // (ref 260)
              geometry: type = 1, x = x0, y = y0, width = w0, height
              = h0;
          4) 'rgan' // (ref 261)
              geometry: type = 1, x = x1, y = y1, width = w1, height
              = h1;
          5) 'rgan' // (ref 270)
              geometry: type = 2, x = x2, y = y2, radius = r2;
          6) 'udes', lang = en, name = 'face', description = ' ',
          tags = face
          7) 'udes', lang = fr, name = 'Jean', description = ' ',
          tags = person
          8) 'udes', lang = fr, name = 'Notre-Dame', description =
          'Notre-Dame de Paris', tags = building
      ItemPropertyAssociation 'ipma': version = 2, entry_count = 1
          // Item - Property associations
          1) item_ID = 1, association_count = 5
              essential = 1, property_index = 1;
              essential = 0, property_index = 2;
              essential = 0, property_index = 3;
              essential = 0, property_index = 4;
              essential = 0, property_index = 5;
          // Region - Property assocations
          region_count = 3
          1) from_property_index = 3, association_count = 1
              to_property_index = 6;
          2) from_property_index = 4, association_count = 2
              to_property_index = 6;
              to_property_index = 7;
          3) from_property_index = 5, association_count = 1
              to_property_index = 8;
              MediaDataBox 'mdat' or 'idat':
   HEVC Image (at file offset X, with length Y)
```

This HEIF file is similar to the one corresponding to the first embodiment, except for the association between a region annotation item property and its item properties. In this HEIF file, the association between a region annotation item property **330** and its item properties **340, 341** is described inside a new version the 'ipma' box **321.**

In a variant of the second embodiment, the entity association loop and the region annotation association loop are merged together. In this alternative embodiment, the item property index is used as the identifier for a region annotation item property to be used as the value of the item_ID field. Consequently, identifiers for an item, an entity group and/or a track must not correspond to the index of an item property. Possibly, an identifier for an item, an entity group and/or a track takes priority before the index of an item property. Possibly, a new version of the 'ipma' box is defined to signal the use of this alternative embodiment.

In another variant of the second embodiment, the entity association loop and the region annotation association loop are merged together. In this other variant of the second embodiment, the first bit of the item_ID field is used to signal whether the item_ID field corresponds to an item, an entity group or a track, or if it corresponds to an item property index. Possibly, a new version of the 'ipma' box is defined to signal the use of this variant of the second embodiment.

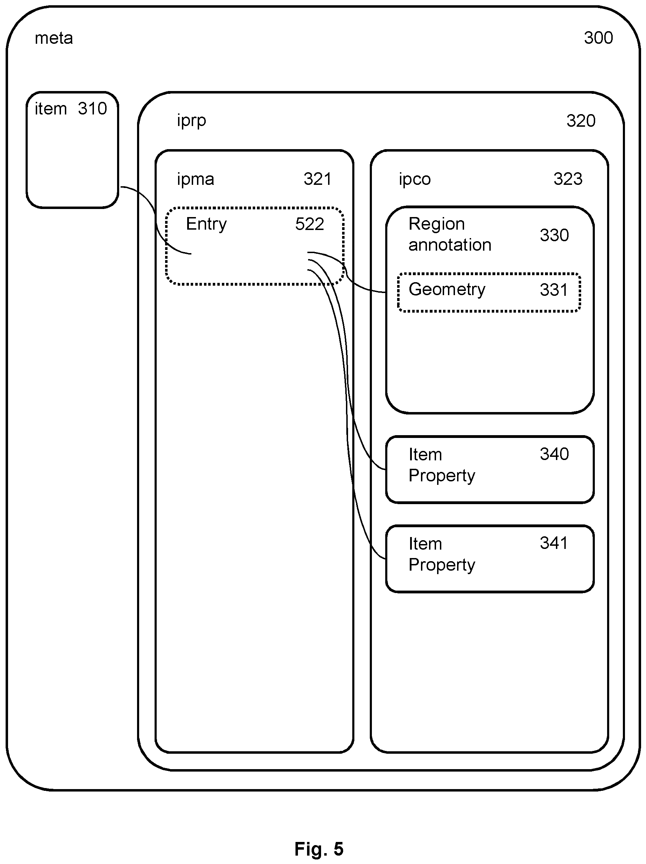

**Figure 5** illustrates a third embodiment of the invention. This embodiment is similar to the first and second embodiments except for the association between the region annotation and its properties. In this embodiment, the association is realized through the 'ipma' box **321,** as part of the association between the item **310** and its properties. This association is specified inside the entry **522** as a list of properties. The properties **340** and **341** corresponding to the region annotation **330** are associated directly with the item **310** inside the entry **522.**

In this third embodiment, the ordering of the properties inside the entry **522** indicates to which part of the item **310** each item property applies. The descriptive properties associated with the whole item **310** come first, before any region annotation item property. Then, each region annotation item property is listed, followed by the descriptive properties associated with it. Last, the transformative properties associated with the whole item **310** are listed.

In this third embodiment, a descriptive item property is either associated with the previous region annotation item property in the list, if there is one, or with the whole image if there is no previous region annotation item property.

In this third embodiment, the specific handling of region annotation properties may be indicated by defining a new item property type for them: "region item property".

In this third embodiment, the region annotation properties may be indicated as essential to inform a reader that it should not ignore these properties.

In this third embodiment, the annotated image from **Figure 2b** may be stored in a HEIF file with the following structure:

```
 FileTypeBox 'ftyp': major-brand = 'heic', compatible-brands = 'heic'
 MetaBox 'meta': (container)
   HandlerBox 'hdlr': 'pict'
   PrimaryItemBox 'pitm': item_ID = 1;
   ItemInfoBox 'iinf': entry_count = 1
       'infe': item_ID = 1, item_type = 'hvc1'; // (ref 250)
   ItemLocationBox 'iloc': item_count = 1
      item_ID = 1, extent_count = 1, extent_offset = X,
      extent_length = Y;
   ItemReferenceBox 'iref':
   ItemPropertiesBox 'iprp':
      ItemPropertyContainerBox 'ipco':
          1) 'hvcC' // Config for annotated image
          2) 'ispe' // Size of annotated image
          3) 'rgan' // (ref 260)
              geometry: type = 1, x = x0, y = y0, width = w0, height
              = h0;
          4) 'rgan' // (ref 261)
              geometry: type = 1, x = x1, y = y1, width = w1, height
              = h1;
          5) 'rgan' // (ref 270)
              geometry: type = 2, x = x2, y = y2, radius = r2;
          6) 'udes', lang = en, name = 'face', description = '',
          tags = face
          7) 'udes', lang = fr, name = 'Jean', description = '',
          tags = person
          8) 'udes', lang = fr, name = 'Notre-Dame', description =
          'Notre-Dame de Paris', tags = building
      ItemPropertyAssociation 'ipma': entry_count = 1
          1) item_ID = 1, association_count = 9
              essential = 1, property_index = 1;
              essential = 0, property_index = 2;
              essential = 0, property_index = 3; // first region 260
              essential = 0, property_index = 6;
              essential = 0, property_index = 4; // second region
              261
              essential = 0, property_index = 6;
              essential = 0, property_index = 7;
              essential = 0, property_index = 5; // third region 270
              essential = 0, property_index = 8;
              MediaDataBox 'mdat' or 'idat':
   HEVC Image (at file offset X, with length Y)
```

This HEIF file is similar to those corresponding to the first and second embodiments, except for the association between a region and its properties. In this HEIF file, the association between a region and its properties are described inside the 'ipma' box, inside the list of properties associated with the image item to which the region annotation applies.

The image item with an item_ID of value 1, corresponding to the image item **250,** has 9 properties associated with it. First, the properties of indexes 1 and 2 apply to the whole image. They describe the encoding parameters used for the image and the size of the image. Then, the item property of index 3 describes a first region corresponding to the region **260.** The item property of index 6, describing a face annotation, follows and is associated with this region. Next, the item property of index 4 describes a second region corresponding to the region **261.** Two properties of indexes 6 and 7 follow and are associated with this region. These properties describe a face annotation, and the annotation of a person named "Jean". Last, the item property of index 5 describes a third region corresponding to the region **270.** This item property is followed by the item property of index 8, corresponding to the annotation of the "Notre-Dame de Paris" building.

A fourth embodiment of the invention not illustrated in the drawings is now described. In this embodiment, the geometry of the region and the annotations associated with it are described inside a single (aggregated) item property. Preferably, a new item property is defined for each type of annotation that can be used for a region of an entity.

A syntax of the region annotation item property may be:

```
 aligned(8) class RegionAnnotationProperty
 extends ItemFullProperty('rgan', version = 0, flags = 0) {
   Geometry geometry;
   utf8string lang;
   utf8string name;
   utf8string description;
   utf8string tags;
 }
```

This syntax combines a geometry with the fields from a user description item property. Their semantics are not modified.

A variant may be:

```
 aligned(8) class RegionAnnotationProperty
 extends ItemFullProperty('rgan', version = 0, flags = 0) {
   Location anchor_point;
   Shape shape;
   utf8string lang;
   utf8string name;
   utf8string description;
   utf8string tags;
 }
```

with the same semantics.

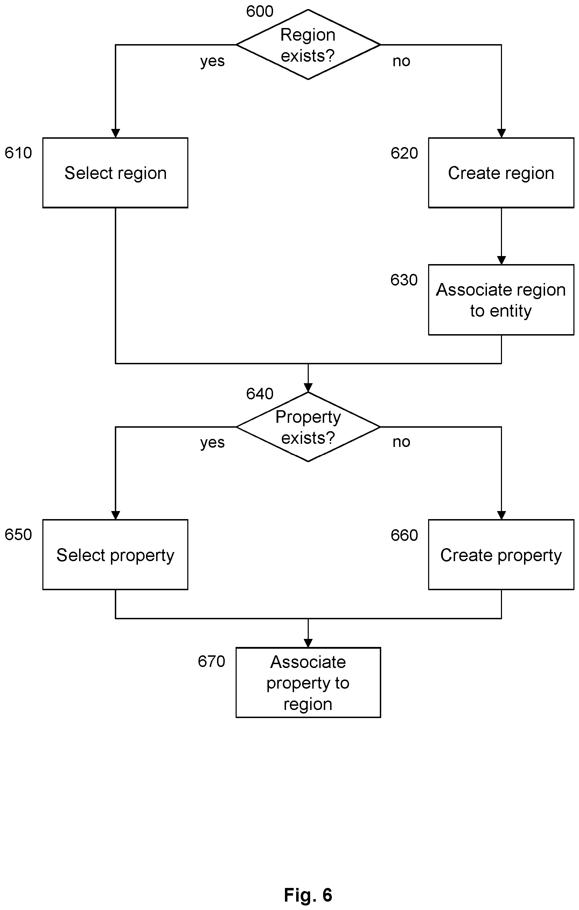

**Figure 6** illustrates the main steps of a process for adding a new region annotation associated with an image item stored in a HEIF file according to embodiments of the invention. It corresponds to the embodiments where the region annotation is described by an item property. These steps can be applied to a HEIF file stored on a disk, stored in memory, or stored with an adapted representation in memory. The new region annotation comprises the geometry of the region and the annotation itself. Possibly, these steps may be modified to add simultaneously several annotations to a region of an image item. Possibly, these steps may also be modified to add simultaneously an annotation to several regions of an image item.

This process can be used when creating a new HEIF file, or when modifying an existing HEIF file.

In a first step **600,** it is determined whether the region already exists in the HEIF file. This determination is realized by comparing the geometry of the region with the geometry of existing regions.

If the region already exists, the next step is step **610,** otherwise, the next step is step **620.**

In step **610,** the RegionAnnotationProperty structure corresponding to the existing region is selected. The next step is step **640.**

At step **620,** a new RegionAnnotationProperty structure for representing the region is created. The geometry of the region is stored inside this new RegionAnnotationProperty structure.

Then, at step **630,** the new RegionAnnotationProperty structure is associated with the image item by storing the association inside the 'ipma' box. The next step is step **640.**

At step **640,** it is determined whether an item property corresponding to the annotation already exists in the HEIF file. This may be done by parsing the item properties in the 'ipco' container box. If the item property already exists, the next step is step **650,** otherwise, the next step is step **660.**

In step **650,** the existing item property is selected.

In step **660,** a new item property is created to represent the annotation within the 'ipco' container box. The type of the item property may depend on the content of the annotation. The information contained in the annotation is stored inside the item property.

After either step **650** or step **660,** at step **670,** the item property is associated with the region.

In the context of the first embodiment, the index of the item property is added to the RegionAnnotationProperty structure.

In the case of the second embodiment, it is determined whether an entry exists in the 'ipma' box for the RegionAnnotationProperty structure. If this is not the case, an entry is created in the 'ipma' box for the RegionAnnotationProperty structure. The index of the item property is added to this entry.

In the case of the third embodiment, it is determined whether there is an entry in the 'ipma' box corresponding to the image item. If this is not the case, an entry is created in the 'ipma' box for the image item. Then, it is determined whether the index of the RegionAnnotationProperty structure is present in this 'ipma' box. If this is not the case, this index is inserted in the entry after the indexes of the descriptive properties associated with the image item and before the indexes of the transformative properties associated with the image item. Last, the index of the item property is inserted after the index of the RegionAnnotationProperty structure and before the index of any other RegionAnnotationProperty structure or any transformative item property. Preferably, the index is inserted just before the index of the next RegionAnnotationProperty structure, or before the index of the first transformative item property, or at the end of the entry.

In the case of the fourth embodiment, the RegionAnnotationProperty structure contains both the geometry and the annotations and no association is needed. In this case, only steps 620, 630, and 660 are realized.

Possibly, if a RegionAnnotationProperty structure enables to define several regions with their respective associated properties, at step **620,** it is determined whether such a structure is already associated with the image item in the HEIF file. If this is the case, then a new entry is added to the RegionAnnotationProperty structure, and the geometry of the region is stored inside this entry. Otherwise, a new RegionAnnotationProperty structure is created and the geometry of the region is stored inside this structure.

Possibly, if a RegionAnnotationProperty structure enables to associate a set of properties with several regions, several steps may be modified. At step **600,** it is determined whether the region exist in a RegionAnnotationProperty structure not comprising any other region. At step **620,** it is determined whether one or more regions are already associated inside a RegionAnnotationProperty structure with a set of properties corresponding to the annotation of the new region annotation. If this is the case, the region is created inside this RegionAnnotationProperty structure and steps **640** to **670** are not executed. If this is not the case, a new RegionAnnotationProperty structure is created.

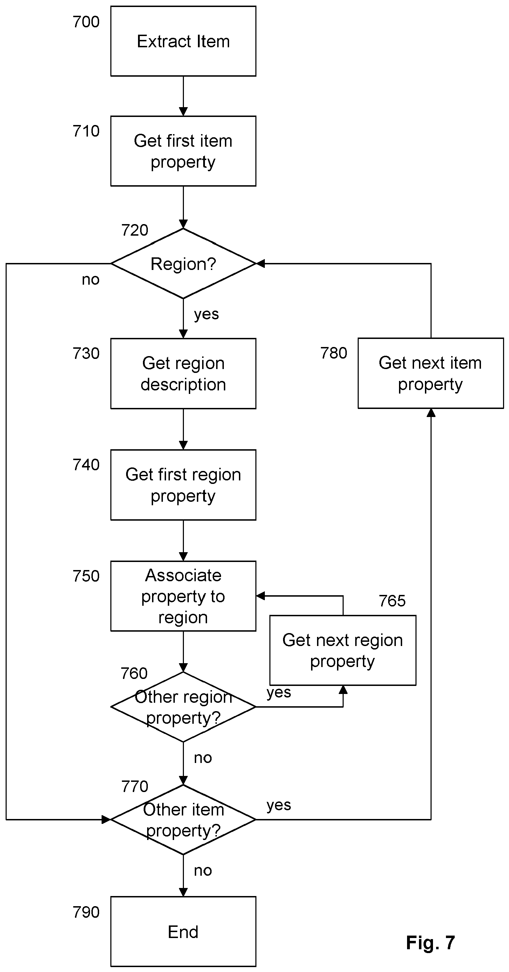

**Figure 7** illustrates the main steps of a process for reading a HEIF file containing region annotations when the region annotations are described by an item property according to embodiments of the invention.

In a first step **700,** an image item is extracted from the HEIF file. Possibly, only a portion of the metadata describing the image item is extracted.

Next, in step **710,** the first item property associated with the image item is extracted. The index of this item property is the first non-zero index in the entry of the 'ipma' box corresponding to the image item. This index is used to extract the item property from the 'ipco' box. If there is no entry corresponding to the image item in the 'ipma' box, or if the entry contains no item property index or contains only property indexes with the value 0, the process ends directly at step **790.**

In step **720,** it is determined whether the extracted item property is a region annotation item property or not. If it is a region annotation item property, the next step is step **730,** otherwise, the next step is step **770.**

In step **730,** the description of the region is extracted from the region annotation item property. The description of the region may include the type of the geometry and/or the parameters defining this geometry. This region may be associated with the image item extracted at step **700.**

Next, in step **740,** the index of the first item property associated with the region are extracted. If there is no item property associated with the region, the process continues directly at step **770.**

In the first embodiment of the invention, the index of the first item property associated with the region is the first one present in the region annotation item property structure.

In the second embodiment of the invention, the index of the first item property associated with the region is the first one in the entry corresponding to the region annotation item property inside the 'ipma' box.

In the third embodiment of the invention, the index of the first item property associated with the region is the first one in the entry for the image item in the 'ipma' box that follows the index of the region annotation item property.

The index of the item property is used to extract the item property from the 'ipco' box.

Then, at step **750,** the item property may be associated with the region. The information contained in the item property may be extracted and associated with the geometry of the region extracted at step **730.**

At step **760,** it is determined whether there are other item properties associated with the region.

In the first embodiment of the invention, it is determined whether there are any non-processed indexes in the region annotation item property structure.

In the second embodiment of the invention, it is determined whether there are any non-processed indexes in the entry corresponding to the region annotation item property inside the 'ipma' box.

In the third embodiment of the invention, it is determined whether the next index in the entry for the image item in the 'ipma' box corresponds to a descriptive item property that is not a region annotation item property.

If there are other item properties associated with the region, the next step is step **765.** Otherwise, the next step is step **770.**

In step **765,** the index of another item property associated with the region is retrieved. The first, second and third embodiments of the invention are handled in a similar way as in step **740.** The next step is step **750.**

In the fourth embodiment of the invention, there is no item property associated with the region and steps **740, 760** and **765** are skipped. The annotations for the region are extracted directly from the region annotation item property and may be associated with the region at step **750.**

In step **770,** it is determined whether there is another item property associated with the image item. This determination is realized by checking whether there are any non-processed indexes in the entry corresponding to the image item inside the 'ipma' box. If there are other item properties associated with the image item, the next step is step **780.** Otherwise, the next step is step **790.**

At step **780,** another item property associated with the image item is extracted. This step is similar to step **710.** The next step is step **720.**

At step **790,** the process ends.

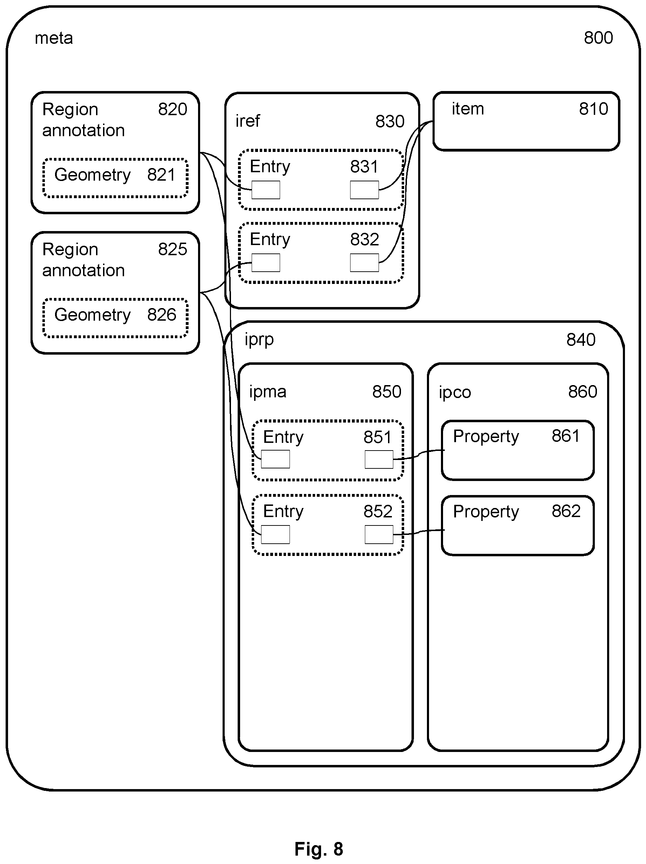

**Figure 8** to **13** illustrates some embodiments of the invention for the HEIF or MIAF standards, where the region annotation **210** is represented using an item.

**Figure 8** illustrates a fifth embodiment of the invention. The 'meta' box **800** contains an item **810,** corresponding for example to an image item. The 'meta' box **800** also contains also two other items **820** and **830** that correspond to region annotations. The geometry of these two region annotation items is described in their respective contents, indicated as geometry **821** and geometry **826.** These contents are identified in the 'iloc' box. The content of a region annotation item may be stored preferably in an 'idat' box. It may may also be stored in either a 'mdat' or an 'imda' box.

The 'iref' box **830** contains two entries, **831** and **832** associating the region annotation items, respectively **820** and **825,** with the image item **810.**

The 'iprp' box **840** contains the 'ipco' box **860** and the 'ipma' box **850.** The 'ipco' box **860** contains the item properties **861** and **862** corresponding to the annotations of the two region annotation items **820** and **825.** The 'ipma' box **850** associates the region annotation items **820** and **825** with their respective item properties **861** and **862** through two entries, respectively **851** and **852.**

In this embodiment, a region annotation item may be defined with an item_type of 'rgan'. The region annotation item may be associated with its image item through an item reference box of type 'cdsc'.

The syntax of the content of region annotation item may be:

```
aligned(8) class RegionAnnotationItem {
   Geometry geometry;
   }
   
```

The semantics of the region annotation item may be:
- geometry is the geometry of the region.

Possibly a version field may be added to the region annotation item for future evolution. Extensions for the region annotation item may also be realized by defining new geometry types.

In this embodiment, all the item properties associated through an entry of the 'ipma' box to the region annotation item apply to the region of the annotated image defined by the geometry of the region annotation item.

In this embodiment, the annotated image from **Figure 2b** may be stored in a HEIF file with the following structure:

```
 FileTypeBox 'ftyp': major-brand = 'heic', compatible-brands = 'heic'
 MetaBox 'meta': (container)
   HandlerBox 'hdlr': 'pict'
   PrimaryItemBox 'pitm': item_ID = 1;
   ItemInfoBox 'iinf': entry_count = 4
       'infe': item_ID = 1, item_type = 'hvc1'; // (ref 250)
       'infe': item_ID = 2, item_type = 'rgan', hidden = true; //
       (ref 260)
       'infe': item_ID = 3, item_type = 'rgan', hidden = true; //
       (ref 261)
       'infe': item_ID = 4, item_type = 'rgan', hidden = true; //
       (ref 270)
   ItemLocationBox 'iloc': item_count = 1
      item_ID = 1, extent_count = 1, extent_offset = X,
      extent_length = Y;
      item_ID = 2, extent_count = 1, extent_offset = 01,
      extent_length = L1;
      item_ID = 3, extent_count = 1, extent_offset = 02,
      extent_length = L2;
      item_ID = 4, extent_count = 1, extent_offset = 03,
      extent_length = L3;
   ItemReferenceBox 'iref':
      referenceType = 'cdsc', from_item_ID = 2, reference_count = 1,
      to_item_ID = 1;
      referenceType = 'cdsc', from_item_ID = 3, reference_count = 1,
      to_item_ID = 1;
      referenceType = 'cdsc', from_item_ID = 4, reference_count = 1,
      to_item_ID = 1;
   ItemPropertiesBox 'iprp':
      ItemPropertyContainerBox 'ipco':
          1) 'hvcC' // Config for annotated image
          2) 'ispe' // Size of annotated image
          3) 'udes', lang = en, name = 'face', description = '',
          tags = face
          4) 'udes', lang = fr, name = 'Jean', description = '',
          tags = person
          5) 'udes', lang = fr, name = 'Notre-Dame', description =
          'Notre-Dame de Paris', tags = building
      ItemPropertyAssociation 'ipma': entry_count = 4
          1) item_ID = 1, association_count = 2
              essential = 1, property_index = 1;
              essential = 0, property_index = 2;
          2) item_ID = 2, association_count = 1
              essential = 0, property_index = 3;
          3) item_ID = 3, association_count = 2
              essential = 0, property_index = 3;
              essential = 0, property_index = 4;
          4) item_ID = 4, association_count = 1
              essential = 0, property_index = 5;
              MediaDataBox 'mdat' or 'idat':
   HEVC Image (at file offset X, with length Y)
   Region Annotation (at file offset 01, with lenght L1)
      geometry: type = 1, x = x0, y = y0, width = w0, height = h0;
   Region Annotation (at file offset 02, with lenght L2)
      geometry: type = 1, x = x1, y = y1, width = w1, height = h1;
   Region Annotation (at file offset 03, with lenght L3)
      geometry: type = 2, x = x2, y = y2, radius = r2;
```

In this HEIF file, the image item **250** is represented by the item with an item_ID value of 1. The region **260** is represented by the item with an item_ID value of 2. It is associated with the item property at index 3 through the second entry of the 'ipma' box. This property corresponds to a face annotation. The geometry of the region annotation item is described in the first region annotation part of the MediaDataBox.

The region **261** is represented by the item with an item_ID value of 3. It is associated with the item properties at index 3 and 4 through the third entry of the 'ipma' box. These properties correspond respectively to a face annotation and to an annotation describing a person named "Jean". The geometry of the region annotation item is described in the second region annotation part of the MediaDataBox.

The region **270** is represented by the item with an item_ID value of 4. It is associated with the item property at index 5 through the fourth entry of the 'ipma' box. This property corresponds to an annotation describing "Notre-Dame de Paris" as a building. The geometry of the region annotation item is described in the third region annotation part of the MediaDataBox.

Each region annotation item is associated with the annotated image through an item reference of type 'cdsc'.

All the region annotation items may have a hidden property set to true indicating to a reader that this item is not intended to be displayed.

In a first variant of this fifth embodiment, the syntax of the region annotation item may be:

```
 aligned(8) class RegionAnnotationItem {
   unsigned int(8) region_count;
   for (r=0; r < region_count; r++) {
      Geometry geometry;
   }
 }
```

This first variant of the fifth embodiment enables to define several regions sharing the same set of associated item properties in a single region annotation item.

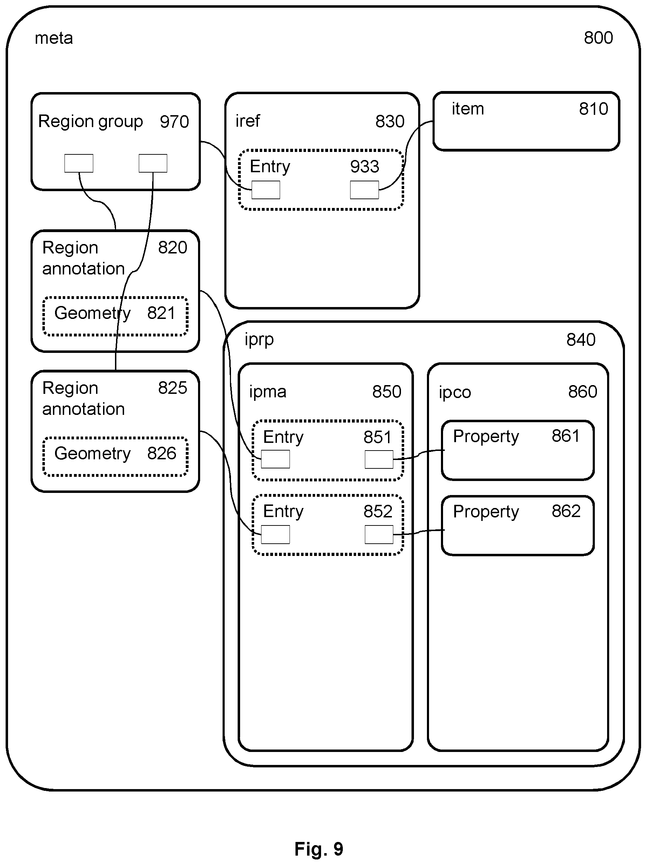

**Figure 9** illustrates a sixth embodiment of the invention. This embodiment is similar to the fifth embodiment except for the association between the region annotation items and the image item.

In this embodiment, the region annotations **820** and **825** are grouped together by the region group **970.** The region group **970** may be an EntityToGroupBox with a grouping_type of 'rgan' or of 'rcog'. This region group **970** is associated with the image item **810** through the entry **933** of the 'iref' box **830.**

In this embodiment, the annotated image from **Figure 2b** may be stored in a HEIF file with the following structure:

```
 FileTypeBox 'ftyp': major-brand = 'heic', compatible-brands = 'heic'
 MetaBox 'meta': (container)
   HandlerBox 'hdlr': 'pict'
   PrimaryItemBox 'pitm': item_ID = 1;
   ItemInfoBox 'iinf': entry_count = 4
       'infe': item_ID = 1, item_type = 'hvc1'; // (ref 250)
       'infe': item_ID = 2, item_type = 'rgan', hidden = true; //
       (ref 260)
       'infe': item_ID = 3, item_type = 'rgan', hidden = true; //
       (ref 261)
       'infe': item_ID = 4, item_type = 'rgan', hidden = true; //
       (ref 270)
   ItemLocationBox 'iloc': item_count = 1
      item_ID = 1, extent_count = 1, extent_offset = X,
      extent_length = Y;
      item_ID = 2, extent_count = 1, extent_offset = 01,
      extent_length = L1;
      item_ID = 3, extent_count = 1, extent_offset = 02,
      extent_length = L2;
      item_ID = 4, extent_count = 1, extent_offset = 03,
      extent_length = L3;
   GroupsListBox 'grpl':
      grouping_type = 'rgan', group_id = 100, num_entities_in_group
      = 3, entity_id = 2, 3, 4;
   ItemReferenceBox 'iref':
      referenceType = 'cdsc', from_item_ID = 100, reference_count =
      1, to_item_ID = 1;
   ItemPropertiesBox 'iprp':
      ItemPropertyContainerBox 'ipco':
          1) 'hvcC' // Config for annotated image
          2) 'ispe' // Size of annotated image
          3) 'udes', lang = en, name = 'face', description = '',
          tags = face
          4) 'udes', lang = fr, name = 'Jean', description = '',
          tags = person
          5) 'udes', lang = fr, name = 'Notre-Dame', description =
          'Notre-Dame de Paris', tags = building
      ItemPropertyAssociation 'ipma': entry_count = 4
          1) item_ID = 1, association_count = 2
              essential = 1, property_index = 1;
              essential = 0, property_index = 2;
          2) item_ID = 2, association_count = 1
              essential = 0, property_index = 3;
          3) item_ID = 3, association_count = 2
              essential = 0, property_index = 3;
              essential = 0, property_index = 4;
          4) item_ID = 4, association_count = 1
              essential = 0, property_index = 5;
              MediaDataBox 'mdat' or 'idat':
   HEVC Image (at file offset X, with length Y)
   Region Annotation (at file offset 01, with lenght L1)
      geometry: type = 1, x = x0, y = y0, width = w0, height = h0;
   Region Annotation (at file offset 02, with lenght L2)
      geometry: type = 1, x = x1, y = y1, width = w1, height = h1;
   Region Annotation (at file offset 03, with lenght L3)
      geometry: type = 2, x = x2, y = y2, radius = r2;
```

This HEIF file is similar to the one corresponding to the fifth embodiment, except for the association between a region annotation item and the image item. In this HEIF file, the region annotation items with the item_ID 2, 3, and 4 are grouped inside a group of grouping_type 'rgan' and with a group_id **100.** This group is associated with the image item through an item reference with a referenceType 'cdsc'.

In a variant of this embodiment, the item properties **861** and **862** are associated with the region group **970.**

In another variant of this embodiment, the item properties **861** and **862** are associated with the region group **970,** the region group **970** is not associated with the image item **810,** and the region annotation items **820** and **825** are associated with the image item **810** through item references.

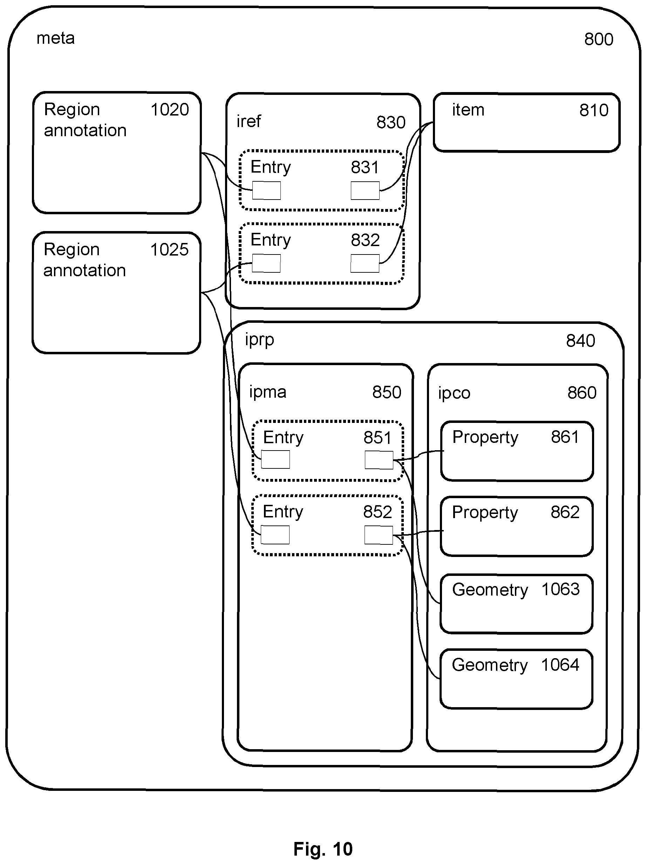

**Figure 10** illustrates a seventh embodiment of the invention. This embodiment is similar to the fifth embodiment except for the description of the geometry of the regions. In this embodiment, the two region annotation items **1020** and **1025** don't have their geometry inside their respective contents. Instead, these region annotation items are associated with the geometry item properties **1063** and **1064** respectively, through the entries **851** and **852** inside the 'ipma' box **850** respectively.

In this embodiment, the geometry item property may be defined as follows:
- Box type: 'geom'
- Property type: Descriptive item property
- Container: ItemPropertyContainerBox
- Mandatory (per item): Yes for an item of type 'rgan'
- Quantity (per item): Zero or one

The syntax of the geometry item property may be:

```
 aligned(8) class GeometryProperty
 extends ItemFullProperty('geom', version = 0, flags = 0) {
   Geometry geometry;
   }
```

The semantics of the geometry item property may be:
- geometry is the geometry of the region.

In this embodiment, the annotated image from **Figure 2b** may be stored in a HEIF file with the following structure:

```
 FileTypeBox 'ftyp': major-brand = 'heic', compatible-brands = 'heic'
 MetaBox 'meta': (container)
   HandlerBox 'hdlr': 'pict'
   PrimaryItemBox 'pitm': item_ID = 1;
   ItemInfoBox 'iinf': entry_count = 4
       'infe': item_ID = 1, item_type = 'hvc1'; // (ref 250)
       'infe': item_ID = 2, item_type = 'rgan', hidden = true; //
       (ref 260)
       'infe': item_ID = 3, item_type = 'rgan', hidden = true; //
       (ref 261)
       'infe': item_ID = 4, item_type = 'rgan', hidden = true; //
       (ref 270)
   ItemLocationBox 'iloc': item_count = 1
      item_ID = 1, extent_count = 1, extent_offset = X,
      extent_length = Y;
   ItemReferenceBox 'iref':
      referenceType = 'cdsc', from_item_ID = 2, reference_count = 1,
      to_item_ID = 1;
      referenceType = 'cdsc', from_item_ID = 3, reference_count = 1,
      to_item_ID = 1;
      referenceType = 'cdsc', from_item_ID = 4, reference_count = 1,
      to_item_ID = 1;
   ItemPropertiesBox 'iprp':
      ItemPropertyContainerBox 'ipco':
          1) 'hvcC' // Config for annotated image
          2) 'ispe' // Size of annotated image
          3) 'geom'
              geometry: type = 1, x = x0, y = y0, width = w0, height
              = h0;
          4) 'geom'
              geometry: type = 1, x = x1, y = y1, width = w1, height
              = h1;
          5) 'geom'
              geometry: type = 2, x = x2, y = y2, radius = r2;
          6) 'udes', lang = en, name = 'face', description = '',
          tags = face
          7) 'udes', lang = fr, name = 'Jean', description = '',
          tags = person
          8) 'udes', lang = fr, name = 'Notre-Dame', description =
          'Notre-Dame de Paris', tags = building
      ItemPropertyAssociation 'ipma': entry_count = 4
          1) item_ID = 1, association_count = 2
              essential = 1, property_index = 1;
              essential = 0, property_index = 2;
          2) item_ID = 2, association_count = 2
              essential = 0, property_index = 3;
              essential = 0, property_index = 6;
          3) item_ID = 3, association_count = 3
              essential = 0, property_index = 4;
              essential = 0, property_index = 6;
              essential = 0, property_index = 7;
          4) item_ID = 4, association_count = 2
              essential = 0, property_index = 5;
              essential = 0, property_index = 8;
              MediaDataBox 'mdat' or 'idat':
   HEVC Image (at file offset X, with length Y)
```

This HEIF file is similar to the one corresponding to the fifth embodiment, except for the description of the geometry of region annotation items. A region annotation item is associated with a geometry item property to specify its geometry. As a region annotation item doesn't have any content in this HEIF file, it may have no associated entry in the ItemLocationBox, or its associated entry may have no extent.

In a first variant to this seventh embodiment, the syntax of the geometry item property may be:

```
 aligned(8) class GeometryProperty
 extends ItemFullProperty('geom', version = 0, flags = 0) {
   unsigned int(8) geometry_count;
   for (i=0; i < geometry_count; i++) {
      Geometry geometry;
   }
 }
```

This first alternative enables to define several geometries inside a single geometry item property. A region annotation item associated with a geometry item property comprises one region for each geometry defined in the geometry item property. All the item properties associated with the region annotation item apply to all the regions of the region annotation item.

In a second variant to this seventh embodiment, the geometry of a region is defined by two item properties: a location item property and a shape item property.

In this second variant, the location item property may be defined as follows:
- Box type: 'relo'
- Property type: Descriptive item property
- Container: ItemPropertyContainerBox
- Mandatory (per item): Yes for an item of type 'rgan'
- Quantity (per item): Zero or one

The syntax for the location property may be:

```
 aligned(8) class LocationProperty
 extends ItemFullProperty('relo', version = 0, flags = 0) {
   Location location;
 }
```

The semantics of the location item property may be:
- location is the location of the region.

In this second variant, the shape item property may be defined as follows:
- Box type: 'resh'
- Property type: Descriptive item property
- Container: ItemPropertyContainerBox
- Mandatory (per item): Yes for an item of type 'rgan'
- Quantity (per item): Zero or one

The syntax for the shape property may be:

```
 aligned(8) class ShapeProperty
 extends ItemFullProperty('resh', version = 0, flags = 0) {
   Shape shape;
 }
```

The semantics of the shape item property may be:
- shape is the shape of the region.

Alternatively, several location item properties may be associated with the same region annotation item. In this alternative, the region annotation item comprises one region for each location item property. All these regions share the same shape.

Alternatively, several location item properties and/or several shape item properties may be associated with the same region annotation item. In this alternative, the region annotation item comprises one region for each combination of a location item property and a shape item property. For example, if a region annotation item is associated with two location item properties and three shape item properties, it comprises six regions.

In yet another alternative of this second variant, a location item property and or a shape item property may contain respectively several locations or several shapes. In this alternative, the region annotation item comprises one region for each combination of a location contained in one of the location item properties and a shape contained in one of the item properties.

In another alternative, several geometry item properties may be associated with the same region annotation item. In this alternative, the region annotation item comprises one region for each geometry item property.

For all the alternatives where several regions are comprised inside a region annotation item, all the item properties associated with the region annotation item apply to all the regions comprised inside the region annotation item.

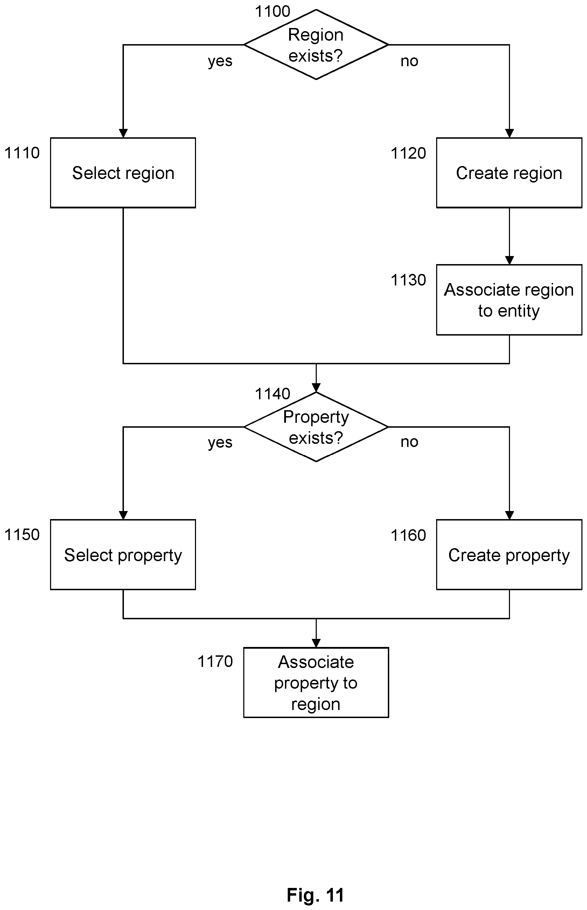

**Figure 11** illustrates the main steps of a process for adding a new region annotation to an image item stored in a HEIF file when the region annotation is described by an item according to embodiments of the invention. This figure shares similarities with **Figure 6****.** These steps can be applied to a HEIF file stored on a disk, stored in memory, or stored with an adapted representation in memory. The new region annotation comprises the geometry of the region and the annotation itself. Possibly, these steps may be modified to add simultaneously several annotations to a region of an image item. Possibly, these steps may also be modified to add simultaneously an annotation to several regions of an image item.

This process can be used when creating a new HEIF file, or when modifying an existing HEIF file.

In a first step **1100,** it is determined whether a region annotation item with the same geometry already exists in the HEIF file.

If a region annotation item with the same geometry already exists, the next step is step **1110,** otherwise, the next step is step **1120.**

In step **1110,** the item_ID value corresponding to the existing region annotation item is selected. The next step is step **1140.**

At step **1120,** a new region annotation item for representing the region is created. An 'infe' box describing the region annotation item may be created inside the 'iinf' box of the HEIF file. An entry inside the 'iloc' box may be added to indicate the location of the content of the region annotation item. An item_ID value is associated with this new region annotation item.

In the case of the fifth embodiment or of the sixth embodiment, the geometry of the region is stored inside the content of the region annotation item.

In the case of the seventh embodiment, a new geometry item property may be created to store the geometry of the region. The index of this new item property is memorized. Possibly, if an identical geometry item property exists in the HEIF file its index is memorized and no new item property is created.

In the case of the seventh embodiment, a new location item property and a new shape item property may be created to store the geometry of the region. The indexes of these new item properties are memorized. Possibly, if either or both of these item properties exist in the HEIF file their indexes are memorized and no corresponding item property is created.

Then, at step **1130,** the new region annotation item is associated with the image item.

In the case of the fifth or seventh embodiment and for some variants of the sixth embodiment, a new reference of type 'cdsc' is created in the 'iref' box of the HEIF file. This reference associates the region annotation item with the image item.

In the case of some variants of the sixth embodiment, it is first determined whether a region group that may be an EntityToGroupBox of grouping_type 'rgan' is associated with the image item. If this is the case, the region annotation item is added to the region group. If this is not the case, a new region group of type 'rgan' is created, containing the new region annotation item. Then a new reference of type 'cdsc' is created in the 'iref' box of the HEIF file. This reference associates the region group to the image item.

In the case of a combination of the sixth embodiment with either the fifth or the seventh embodiment, either of these processes may be applied. Possibly, it is first determined whether a region group that is an EntityToGroupBox of grouping_type 'rgan' is associated with the image item. If this is the case, the region annotation item is added to the region group. If this is not the case, it is determined whether another region annotation item is associated with the image item. If this is the case, a new region group of type 'rgan' is created, containing both the other region annotation item and the new region annotation item. The reference between the other region annotation item and the image item is removed and a new reference of type 'cdsc' between the region group and the image item is created. If this is not the case, a new reference of type 'cdsc' between the new region annotation item and the image item is created.

The next step is step **1140.**

At step **1140,** it is determined whether an item property corresponding to the annotation already exists in the HEIF file. If the item property already exists, the next step is step **1150,** otherwise, the next step is step **1160.**

In step **1150,** the existing item property is selected.

In step **1160,** a new item property is created to represent the annotation. The type of the item property depends on the content of the annotation. The information contained in the annotation is stored inside the item property.

After either step **1150** or step **1160,** the next step is step **1170.**

At step **1170,** the item property is associated with the region annotation item.

If the region annotation item has already an associated entry in the 'ipma' box, then the index of the item property is added to this entry.

If the region annotation item doesn't have an associated entry in the 'ipma' box, then a new entry is created for this item and the index of the item property is added to this entry.

In the case of the seventh embodiment, the geometry item property, the indexes of the location item property, and/or the shape item property that were memorized at step **1120** are also added to this entry.

Possibly, if a region annotation item may comprise several regions, several steps may be modified. At step **1100,** it is determined whether a region annotation item comprising a single region with the same geometry exists. At step **1120,** it is determined whether an existing region annotation item is associated with the image item with a set of properties corresponding to the annotation of the new region annotation. If this is the case, the geometry of the new region is added to the existing region annotation item and steps **1140** to **1170** are not executed. If this is not the case, a new region annotation item is created.

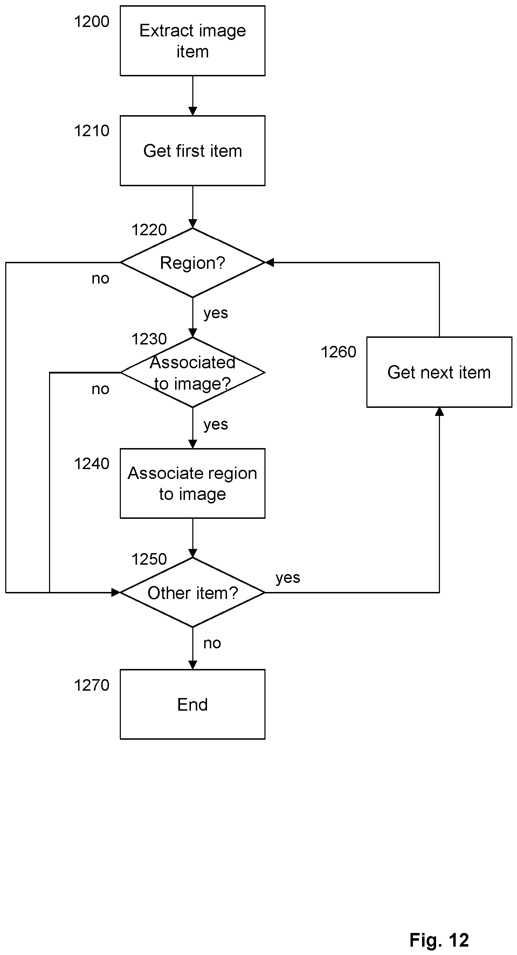

**Figure 12** illustrates the main steps of a process for reading a HEIF file containing region annotations when the region annotations are described by an item according to embodiments of the invention.

In a first step **1200,** an image item is extracted from the HEIF file. Possibly, only part of the metadata describing the image item is extracted.

In step **1210,** a first item, different from the image item, is extracted from the HEIF file. If no other items exist in the HEIF file, the algorithm continues directly at step **1270.**

Then, in step **1220,** it is determined whether the other item is a region annotation item. If it is a region annotation item, the next step is step **1230,** otherwise, the next step is step **1250.**

At step **1230,** it is determined whether the region annotation item is associated with the image item by a reference of type 'cdsc' inside the 'iref' box. If this is the case, the next step is step **1240,** otherwise the next step is step **1250.**

At step **1240,** the item properties associated with the region annotation item through an entry of the 'ipma' box are extracted.

Possibly in the context of the sixth embodiment, it is determined whether the region annotation item is contained in a region group that is an EntityToGroupBox with a grouping_type of type 'rgan'. If this is the case, the item properties associated with the region group through an entry of the 'ipma' box are extracted.

Then the geometry of the region annotation item is extracted.

In the context of the fifth embodiment, or of some variants of the sixth embodiment, the geometry of the region annotation item is extracted from the content of the region annotation item.

In the context of the seventh embodiment, the geometry of region annotation item from the geometry item properties, the location item properties, and/or the shape item properties associated with the region annotation item.

The region in link with the extracted item properties is associated with the image item. The information contained in the item properties may be extracted and associated with the geometry of the region to the image item.

If the region annotation item comprises several regions, then each of these regions in link with the extracted item properties is associated with the image item. The information contained in the item properties may be extracted and associated with the geometry of each of these regions to the image item.

The next step is step **1250.**

At step **1250,** it is determined whether there are other items different from the image item in the HEIF file. If this is the case, the next step is step **1260,** otherwise, the next step is step **1270.**

At step **1260,** another item is extracted from the HEIF file. The next step is step **1220.**

At step **1270,** the process ends.

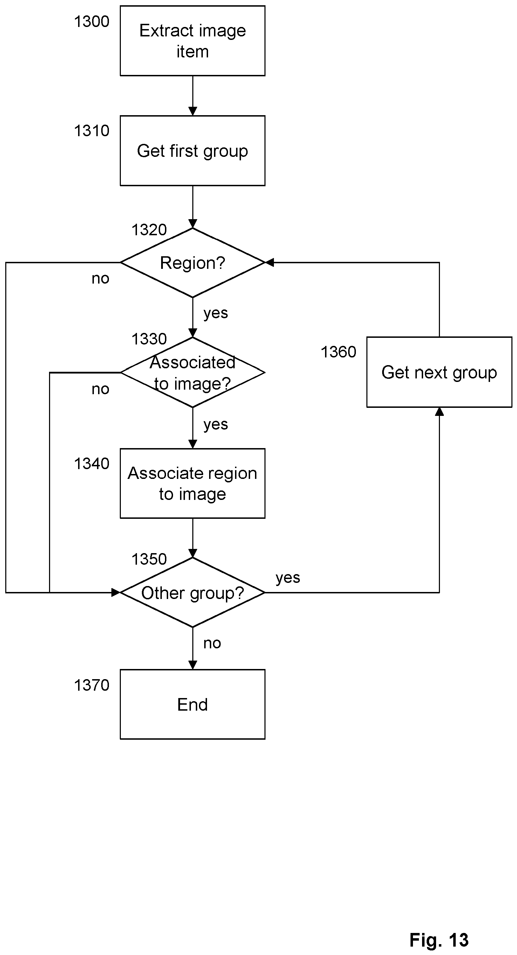

**Figure 13** illustrates the main steps of a process for reading a HEIF file containing region annotations when the region annotations are described by an item according to some variants of the sixth embodiment. This process is similar to the one illustrated by **Figure 12****.**

In a first step **1300,** an image item is extracted from the HEIF file. Possibly, only part of the metadata describing the image item is extracted.

In step **1310,** a first group is extracted from the HEIF file. If no group exist in the HEIF file, the algorithm continues directly at step **1370.**

Then, in step **1320,** it is determined whether the group is a region group that is an EntityToGroupBox with a grouping type of 'rgan'. If it is a region group, the next step is step **1330,** otherwise, the next step is step **1350.**

At step **1330,** it is determined whether the region group is associated with the image item by a reference of type 'cdsc' inside the 'iref' box. If this is the case, the next step is step **1340,** otherwise the next step is step **1350.**

At step **1340,** the region annotation items contained in the group are retrieved. For each region annotation item, its region and its item properties are extracted and associated with the image item as described in step **1240.**

If the region annotation item comprises several regions, then each of these regions in link with the extracted item properties is associated with the image item as described in step **1240.**

Possibly, the item properties associated to the region group are extracted. For each region annotation item contained in the group, its region is extracted. Then each extracted region combined with all the extracted item properties is associated with the image item as described in step **1240.**

The next step is step **1350.**

At step **1350,** it is determined whether there are other groups in the HEIF file. If this is the case, the next step is step **1360,** otherwise, the next step is step **1370.**

At step **1360,** another group is extracted from the HEIF file. The next step is step **1320.**

At step **1370,** the process ends.

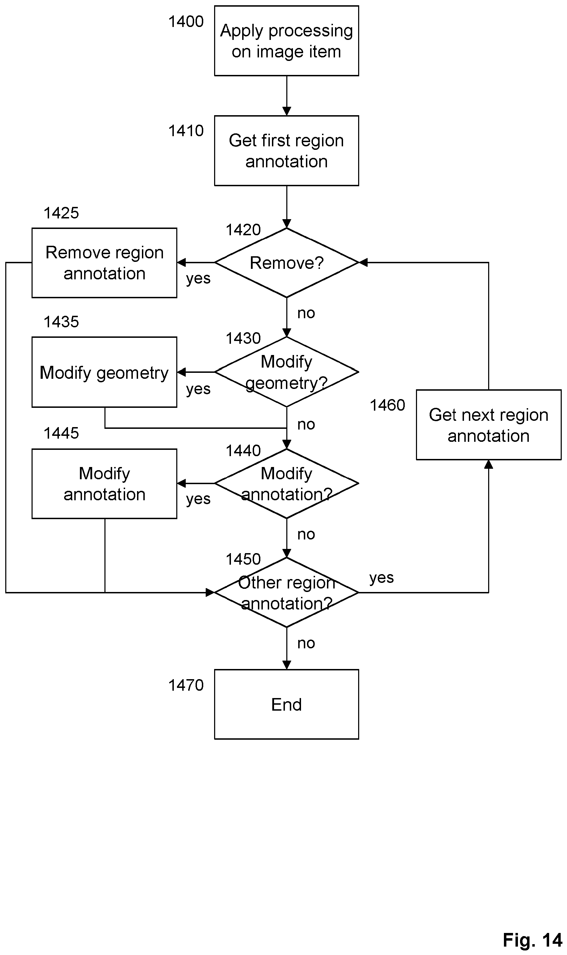

**Figure 14** illustrates a process for processing a HEIF file containing an image and one or more region annotation items associated with this image according to embodiments of the invention. The process may be an image edition process. It may be a process removing parts of an image such as a crop. It may be a process transforming the geometry of the image such as a perspective correction, a rotation, or an affine transformation. It may be a process changing the content of the image such as applying a filter, or drawing on the image. The process may be a metadata edition process. It may be a process for removing private metadata. It may be a process for filtering metadata. It may be a process for translating metadata.

In the first step **1400,** the process is applied on the image item. Possibly the image associated with the image item may be modified.

Possibly the result of the process may be stored in another image item as a derived image item. In this case, the region annotation items associated with the original image item are also associated with this derived image item. In the following steps, the processed image item is the derived image item.

In the step **1410,** a first region annotation associated with the processed image item is retrieved. If no region annotation is associated with the processed image item, the next step is the step **1470.**

In the step **1420,** it is determined whether the region annotation should be removed. Depending on the process, different criteria may be used. A process may remove all region annotations. A process may remove any region annotation with a specific type. For example, a privacy preserving filter may remove any region annotation represented by a user-defined item property. A process may remove a region annotation depending on its localization. For example, a crop may remove any region annotation that doesn't intersect with the remaining image.

As an example, in **Figure 2b****,** the region annotation **260** may be removed from the edited image as the region targeted by the region annotation **260** was cropped out of the edited image.

If it is determined that the region annotation is to be removed, the next step is step **1425.** Otherwise the next step is step **1430.**

In step **1425,** the region annotation is removed. The next step is step **1450.**

In step **1430,** it is determined whether the region annotation's geometry should be modified. Any process transforming the geometry of the image should also modify the region annotation's geometry. Such process comprises the rotation of the image, the scaling of the image, applying an affine transform on the image, correcting the perspective distortion of the image...

If it is determined that the region annotation's geometry should be modified, the next step is step **1435.** Otherwise, the next step is step **1440.**

In step **1435,** the geometry of the region annotation is modified according to the process. Possibly the modified geometry is the exact result of applying the geometry transformation to the geometry of the region annotation. Possibly the modified geometry is an approximate result of applying the geometry transformation to the geometry of the region annotation.

For example, in **Figure 2b****,** the region **261** is initially a rectangle. The perspective correction applied on the image transforms this region from a rectangle to a trapezoid. The modified geometry may be a polygon representing exactly this trapezoid. It may be a polygon with integer coordinates representing an approximation of the rational coordinates of the trapezoid. It may be a rectangle approximating the shape of the trapezoid.

The next step is step **1440.**

In step **1440,** it is determined whether the annotation of the region annotation should be modified. Depending on the process different criteria may be used. A process translating textual annotation may modify the text representing the annotation. A process filtering the image, for example by applying a blur, may modify the annotation to remove precise parts from it.

If it is determined that the annotation of the region annotation should be modified, the next step is step **1445.** Otherwise, the next step is step **1450.**

In step **1445,** the annotation of the region annotation is modified according to the process.

For example, in **Figure 2b****,** the region **261** has a region annotation corresponding to the description of a person. A privacy preserving process may keep the indication that the region annotation corresponds to a person, but remove the name of the person.

The next step is step **1450.**

In step **1450,** it is determined whether there are other region annotations to process. If it is determined that there are other region annotations to process, the next step is step **1460.** Otherwise, the next step is step **1470.**

In step **1460,** another region annotation associated with the image item is retrieved. The next step is step **1420.**

In step **1470,** the process ends.

### Annotation description

An annotation may be the focus location inside a captured picture. It may be represented using a user description item property, for example using a specific value for the name field and/or for the tags field, such as for example "focus". It may be represented by a new item property.

An annotation may be a detected face inside an image. It may be represented using a user description item property, for example using a specific value for the name field and/or for the tags field such as for example "face". It may be represented by a new item property.

An annotation may be an object detected inside an image by an object detection tool. It may be represented using a user description item property, for example using a specific value for the name field and/or for the tags field, and/or using a more descriptive value for the description field. For example, the name field may be "building" and the description field may be "House, building or monument". It may be represented by a new item property.

An annotation may be a specific object instance detected inside an image by an object detection tool. It may be represented using a user description item property, for example using a specific value for describing the generic type of the object in the tags field, using a more precise value corresponding to the object instance in the name field, and/or using descriptive value for the object instance in the description field. For example, the tags field may "church", the name field may be "Notre Dame" and the description field may be "Notre-Dame de Paris". It may be represented by a new item property.

An annotation may be a GPS location for an object in the image. It may be represented by a new item property.

An annotation may be text extracted from the image through an OCR tool. It may be represented by a user description item property, for example using a specific value for indicating that the annotation corresponds to an OCR result in the name field and/or in the tags field, and representing the OCR output in the description field. For example, the tags field may "ocr" and the description field may be "Notre-Dame de Paris". It may be represented by a new item property. This new item property may include information about the font used, such as its family, style, weight, and/or size. Possibly the result of the OCR tool is split into several region annotations corresponding to different detected text area and/or different detected text styling.

An annotation may describe an edition or a modification applied to a region of an image. It may be represented by a user description item property. It may be represented by a new item property.

An annotation may be stored in an item. This item may be associated with a region annotation item by a reference of type 'cdsc'. This item may be associated with a region annotation item property through a new item property associated to the region annotation item property and referencing this item. The box type of this new item property may be 'rgcd'. For example, an annotation may be stored in an item of 'Exif'. As another example, an annotation may be stored in an XMP document contained in an item of type 'mime' and with content type 'application/rdf+xml'.

In other words, a metadata item may be associated with a region item through an item reference of type 'cdsc' from the metadata item to the region item. A metadata item may be an item of item_type value 'Exif'. A metadata item may be an item of item_type value 'mime' and of content type 'application/rdf+xml'. A metadata item may be an item of item_type value 'mime' and content type set equal to the MIME type specified for MPEG-7 metadata.

Possibly, when using a user description item property, the language field is set to an appropriate value. Possibly, when using a user description item property, several instances of this item property are used with different language field values.

Possibly, a region annotation associated with an entity has no associated annotation. This could be the case of a region annotation item, associated with an image item through an item reference, which has no associated property. This may be useful when the annotation is predefined or known through external means. For example, an application aimed at counting people in an image may identified each person in the image by a region without any associated annotation. When storing the image, the application may also store in an external file that the regions indicated in the image correspond to people.

### Geometry alternatives

Possibly the geometry of a region annotation may include other types. It may include a type for representing an ellipse. It may include a type for representing a 3d box expressed in world coordinates and the associated world to image projection. It may include a type for representing a specific polygon. It may include a type for representing a sphere.

Possibly the geometry of a region annotation may be a segment. Possibly the geometry of a region annotation may be a line, for example defined as a spline or as a Bézier curve. Possibly the geometry of a region annotation may be a set of connected and/or unconnected segments and/or lines.

The geometry of a set of connected segments may be defined by the following structure:

```
   else if (type == 7) {
      // segments
      unsigned int(8) point_count;
      int i;
      for (i=0; i < point_count; i++) {
          unsigned int(field_size) x;
          unsigned int(field_size) y;
      }
   }
```

Possibly the geometry of a region annotation may be limited to fewer types. It may be limited to a rectangle area.

Possibly the type field of the Geometry structure and/or of the Shape structure is a four-character code.

Possibly the location inside the geometry of a region annotation may correspond to the center of the shape.

Possibly a location without an associated shape represents a region of type point.

Possibly the geometry of a region may be represented as one or more equations and/or inequalities. For example, a line may be represented by an equation. As another example, the inside of a triangle may be represented by three inequalities.

Possibly some of or all the coordinates of the geometry of a region annotation may be expressed as rational numbers instead of integers. For example, a point may be represented by the following fields:

```
 // point
      unsigned int(32) xN;
      unsigned int(32) xD;
      unsigned int(32) yN;
      unsigned int(32) yD;
      
```

where
- xN and xD are respectively the numerator and the denominator of the abscissa of the point.
- yN and yD are respectively the numerator and the denominator of the ordinate of the point.

Possibly some of or all the coordinates of the geometry of a region annotation may be expressed as signed integers instead of unsigned integers.For example, the geometry of a region annotation may be represented using the following structure:

```
 aligned(8) class Geometry() {
   unsigned int(1) flag;
   unsigned int(7) type;
   unsigned int field_size = (flag + 1) * 16;
   if (type == 0) {
      // point
      signed int(field_size) x;
      signed int(field_size) y;
   }
   else if (type == 1) {
      // rectangle
      signed int(field_size) x;
      signed int(field_size) y;
      unsigned int(field_size) width;
      unsigned int(field_size) height;
   }
   else if (type == 2) {
      // circle
      signed int(field_size) x;
      signed int(field_size) y;
      unsigned int(field_size) radius;
   }
   else if (type == 3) {
      // polygon
      unsigned int(8) point_count;
      int i;
      for (i=0; i < point_count; i++) {
          signed int(field_size) x;
          signed int(field_size) y;
      }
   }
   else if (type == 4) {
      // 3d box
      signed int(field_size) x_bottom_0;
      signed int(field_size) y_bottom_0;
      signed int(field_size) x_bottom_1;
      signed int(field_size) y_bottom_1;
      signed int(field_size) x_bottom_2;
      signed int(field_size) y_bottom_2;
      signed int(field_size) x_bottom_3;
      signed int(field_size) y_bottom_3;
      signed int(field_size) x_top_0;
      signed int(field_size) y_top_0;
      signed int(field_size) x_top_1;
      signed int(field_size) y_top_1;
      signed int(field_size) x_top_2;
      signed int(field_size) y_top_2;
      signed int(field_size) x_top_3;
      signed int(field_size) y_top_3;
   }
   else if (type == 5) {
      // bit-mask
      signed int(field_size) ox;
      signed int(field_size) oy;
      unsigned int(field_size) mask_item_ID;
   }
   else if (type == 6) {
      // colored mask
      signed int(field_size) ox;
      signed int(field_size) oy;
      unsigned int(32) mask_color;
      unsigned int(field_size) mask_item_ID;
   }
 }
```

Negative values for the x or y fields enable to specify points, top-left corners, and/or centres that are outside the image. This may be useful for updating region annotations during the edition of an HEIF file. A region may be empty if it falls entirely outside the image. Such empty region should be ignored by parsers or readers.

Possibly the field_size of the Geometry structure, of the Location structure, and/or of the Shape structure may be fixed, for example using 32 bits. In this case, the field_size may not be specified inside the structure. When several of these structures are contained in a box, the definition of the field_size may be shared by all the structures. When one or more structures are contained in a full box, the definition of the field_size may be based on the flags field or on the version field of the full box. When one or more structures are contained in a box or a full box, the field_size may depend on the box type. For example, two different geometry item property boxes could be defined, each with its own specific field_size.

Possibly in some embodiments the Geometry structure, the Location structure, and/or the Shape structure may be used together for representing the geometry of a region annotation.

Possibly several geometries sharing the same type could be represented in a compressed form. For example, a list of rectangles could be represented by expressing each field as a difference from the corresponding field of the previous rectangle.

Possibly a mask is always located at the top-left of the image and no position is specified for it.

Possibly a mask has always the same size as the annotated image.

Possibly a mask has a pixel density different from the one of the annotated image. For example, one pixel of the mask may correspond to 4 pixels of the annotated image. As another example, 4 pixels of the mask may correspond to 1 pixel of the annotated image. This difference in pixel density may be described in the Geometry structure or in the Shape structure. This difference may be described using the pixel aspect ratio property.

Possibly a color mask may combine the masks corresponding to several region annotations into another mask for another region annotation. For example, the mask for a region annotation describing a first specific person could use the pixel color value of 0x1. The mask for another region annotation describing a second specific person could use the pixel color value of 0x2. The mask for a region annotation describing persons in a generic way and combining these two regions could use the pixel color value of 0x3.

Possibly, the type of the Geometry structure or of the Shape structure could be specified by the type of the region annotation item property, of the region annotation item, of the geometry item property, and/or of the shape item property.

For example, a point region annotation item property and a rectangle region annotation item property may be defined by the following syntax:

```
 // Point
 aligned(8) class RegionAnnotationProperty
 extends ItemFullProperty('rpnt', version = 0, flags = 0) {
   unsigned int field_size = ((flags & 1) + 1) * 16;
   unsigned int(field_size) x;
   unsigned int(field_size) y;
   unsigned int(1) flag;
   unsigned int(15) entry_count;
   for (i=0; i < entry_count; i++) {
      if (flag)
          unsigned int(16) property_index;
      else
          unsigned int(8) property_index;
          }
          // Rectangle
          aligned(8) class RegionAnnotationProperty
          extends ItemFullProperty('rrec', version = 0, flags = 0) {
   unsigned int field_size = ((flags & 1) + 1) * 16;
   unsigned int(field_size) x;
   unsigned int(field_size) y;
   unsigned int(field_size) width;
   unsigned int(field_size) height;
   unsigned int(1) flag;
   unsigned int(15) entry_count;
   for (i=0; i < entry_count; i++) {
      if (flag)
          unsigned int(16) property_index;
      else
          unsigned int(8) property_index;
   }
 }
```

Possibly a specific region annotation item may be defined for representing a mask. The content of this specific region annotation item may be the image corresponding to the mask. Other information used to define the region represented by the mask, such as the location of the mask or the color used by the mask, may be represented in a specific item property associated with the mask region annotation item.

Possibly, the syntax for the content of such an item may be:

```
 aligned(8) class MaskItem {
   bit(8) data[];
   }
```

Possibly, the content of such an item may include the location of the region with the following syntax:

```
 aligned(8) class MaskItem {
   unsigned int(1) flags;
   unsigned int(7) reserved;
   unsigned int field_size = (flags + 1) * 16;
   unsigned int(field_size) x;
   unsigned int(field_size) y;
   bit(8) data[];
 }
```

Possibly the mask can be stored directly inside the geometry (payload) of the region item. Optionally, the Maskltem may have a parameter indicating a number of bits_per_pixel. Possible values may be 1, 8, 16, 24. Specifying a mask with more than 1 bit per pixel enables to use an alpha-plane layer as a mask.

Possibly the mask may be stored as an image item and may be associated with the region item using an item reference of type 'mask' from the region item to the image item. This image item is hereafter called a "mask image item". The region is defined as previously described, by the image resulting from the application of any transformative item property to the mask image item. Possibly, the location of the region may be specified by associating an 'rloc' item property with the mask image item. Possibly, the geometry of a region annotation that is a bit-mask or a color mask may be represented in the region item payload using the following structure:

```
   else if (type == 5) {
      // bit-mask
      unsigned int(field_size) ox;
      unsigned int(field_size) oy;
   }
   else if (type == 6) {
      // colored mask
      unsigned int(field_size) ox;
      unsigned int(field_size) oy;
      unsigned int(32) mask_color;
 }
```

Possibly, when using a bit-mask, the region may be defined as all the pixels with a 0 value in the mask image. Possibly, the region may be defined as all the pixels with the maximum value in the mask image. Possibly, the region may be defined based on another pixel value. Possibly, the region may be defined based on a predefined colour for the pixels. Possibly, when the number of bits per pixel is greater than 1, the minimum value corresponds to pixels belonging to the region, the maximum value corresponds to pixels not belonging to the region, and intermediate values correspond to pixels partly in the region, enabling to define a region with fuzzy borders. Using an item reference between the region item and the mask image advantageously simplifies the editing process of an HEIF file containing region items by locating all the links between items and/or entities inside a single box.

Possibly the item reference may be from the mask image item to the region item.

Possibly the item reference may use a different type, for example 'rmsk'.

Possibly the item reference may be from the region item to several mask image items. The region is defined as the union of the sub-regions defined by the mask image items. In a variant, there may be several item references from the region item to mask image items.

Possibly a region item may contain the description of the geometries of several regions as a mask. In this case, the region item may be associated with the mask image items using an item reference of type 'mask'. There is one reference for each such inside the item reference of type 'mask'. If the same mask stored as an image item is used for multiple regions declared in a region item, this image item will be referenced several times in the item reference of type 'mask'. The mask image items are listed inside the item reference in the same order as their corresponding regions inside the region item. In other words, the image defining the mask for the N^{th} region with a geometry of type mask and stored as an image item, in declaration order, is identified by the N^{th} reference in the item reference of type 'mask'.

In a variant, the region item may be associated with the mask image items using one item reference of type 'mask' for each mask image item. The 'mask' item references appear inside the 'iref' box in the same order as their corresponding regions inside the region item.

In another variant, the mask image items are listed inside the 'mask' item reference in an arbitrary order. The definition of each mask region contains the index of the corresponding mask image item inside the 'mask' item reference.

For this variant, the geometry of the mask region may be defined using the following syntax:

```
   ...
   else if (type == 5) {
      // bit-mask
      unsigned int(field_size) ox;
      unsigned int(field_size) oy;
      unsigned int(field_size) mask_item_index;
   }
   else if (type == 6) {
      // colored mask
      unsigned int(field_size) ox;
      unsigned int(field_size) oy;
      unsigned int(32) mask_color;
      unsigned int(field_size) mask_item_index;
   }
   ...
```

Possibly the location of the region may be specified by associating an 'rloc' item property with the mask image item.

Possibly a mask region may be associated with several image items by including a list of mask item indexes in the definition of mask regions.

In a variant, the region item may be associated with the mask image items using one item reference of type 'mask' for each mask image item.

Possibly, two mask regions specified for an image item may overlap each other. This means that some pixels of the image belong to both regions.

Possibly the location of a region annotation item may be represented in the content of the item and/or in an associated item property, and the shape of a region annotation item may be represented in the content of the item and/or in an associated item property. For example, the shape of the region may be represented in the content of the item and the location of the region may be represented in an associated item property. In this example, several locations may be associated with the region annotation item. The region annotation item comprises one region for each location, all these regions sharing the same shape.

Possibly the fields defining the number of items contained in a list may be represented with a different size. For example, the region_count field may be represented as a 16-bit unsigned integer.

### Item property alternatives

Possibly, the region annotation item property could extend the ItemProperty box instead of extending the ItemFullProperty box.

Possibly, a region annotation item property associated with an item has the essential field set to the value 1 to ensure that the reader understands the region annotation item property.

Possibly, a new type of property, regional property, is defined in addition to the descriptive property and transformative property types. A processing specific to region annotation item property may be associated with the regional property type instead of being associated with the region annotation item property itself. For example, the processing of item properties according to the third embodiment of the invention could be defined based on the regional property type.

### Item alternatives

Possibly, two region annotation items may share the same content to represent the same region but with different annotations.

Possibly, the region annotation item may be associated with an image item using a different reference type. The reference type used may be 'tbas' or 'dimg'. A new reference type, for example 'rgan' may be defined for describing such an association.

Possibly different types of reference may be used depending on the type of the annotation. For example, a region annotation item corresponding to the focus area may be associated with its annotated image item by a reference of type 'rfoc' indicating that this is a focus area. In this example, the region annotation item may not be associated with an item property for describing its annotation.

Possibly, the region annotation item is of type 'hvc1' and its content is the annotated image.

Possibly, the region annotation item is a derived image item of type 'iden' without any content.

Possibly, the region annotation item is of type 'hvt1' and its content is a tile of the annotated image. The geometry of the region annotation item may be the area covered by the tile. Possibly, the content of the region annotation item is a set of tiles of the annotated image and the geometry of its region may be the area covered by the tiles.

Possibly, the region annotation item corresponds to a sub-picture of the annotated image. The geometry of the region annotation item may be the area covered by the subpicture. Possibly, the region annotation item corresponds to a set of subpictures of the annotated image. The geometry of the region annotation item may be the area covered by the subpictures.

Possibly the box type of the geometry item property may be different. For example, it may be 'rcgr'.

Possibly, the location of the region annotation item is described using the 'rloc' item property.

Possibly, the shape of the region annotation item is described as a rectangle using the 'ispe' item property.

Possibly, the geometry of the region annotation item is described using the 'clap' item property.

For example, in Figure 2b, the region 261 may be represented by a region annotation item 'rgan' without any content. This region annotation item is associated with the image item by a reference of type 'rgan'. The location of the region 261 is represented by a 'rloc' item property. The shape of the region 261 is represented by a 'ispe' item property.

### Groups alternative

The sixth embodiment of the invention may be combined with the fifth embodiment, enabling to associate region annotation items with image items either directly and/or through a region group.

The sixth embodiment of the invention may be combined with the seventh embodiment, enabling to associate region annotation items with image items either directly and/or through a region group.

Possibly in the sixth embodiment, an item property may be associated with a region group to indicate that the property applies to all the region annotation items comprised in the region group. For example, a shape property may be associated with a region group to describe the shape of all the region annotation items of the group. As another example, a user description item property may be associated with a region group to associate this user description item property to all the region annotation items of the group.

In the sixth embodiment of the invention, the grouping_type used by the region group may be 'rcog'.

Possibly, the region group may be associated with an image item using a different reference type. A new reference type, for example 'rcob may be defined for describing such an association.

Using some of these alternatives, as an example the image from Figure 2b may be stored in a HEIF file with the following structure:

```
FileTypeBox 'ftyp': major-brand = 'heic', compatible-brands = 'heic'
 MetaBox 'meta': (container)
   HandlerBox 'hdlr': 'pict'
   PrimaryItemBox 'pitm': item_ID = 1;
   ItemInfoBox 'iinf': entry_count = 4
       'infe': item_ID = 1, item_type = 'hvc1';
       'infe': item_ID = 2, item_type = 'rgan', hidden = true;
       'infe': item_ID = 3, item_type = 'rgan', hidden = true;
       'infe': item_ID = 4, item_type = 'rgan', hidden = true;
   ItemLocationBox 'iloc': item_count = 1
      item_ID = 1, extent_count = 1, extent_offset = X,
      extent_length = Y;
   ItemReferenceBox 'iref':
      referenceType = 'rgan', from_item_ID = 2, reference_count = 1,
      to_item_ID = 1;
      referenceType = 'rgan', from_item_ID = 3, reference_count = 1,
      to_item_ID = 1;
      referenceType = 'rgan', from_item_ID = 4, reference_count = 1,
      to_item_ID = 1;
   GroupsListBox 'grpl':
      grouping_type = 'rcog', group_id = 100, num_entities_in_group
      = 2, entity_id = 2, 3;
   ItemPropertiesBox 'iprp':
      ItemPropertyContainerBox 'ipco':
          1) 'hvcC' // Config for annotated image
          2) 'ispe' // Size of annotated image
          3) 'rloc', x = x0, y = y0
          4) 'ispe', width = w0, height = h0
          5) 'rloc', x = x1, y = y1
          6) 'ispe', width = w1, height = h1
          7) 'rloc', x = x2, y = y2
          8) 'icir', radius = r2
          9) 'udes', lang = en, name = 'face', description = ",
          tags = face
          10) 'udes', lang = fr, name = 'Jean', description = ",
          tags = person
          11) 'udes', lang = fr, name = 'Notre-Dame', description =
          'Notre-Dame de Paris', tags = building
      ItemPropertyAssociation 'ipma': entry_count = 4
          1) item_ID = 1, association_count = 2
              essential = 1, property_index = 1;
              essential = 0, property_index = 2;
          2) item_ID = 2, association_count = 2
              essential = 0, property_index = 3;
              essential = 0, property_index = 4;
          3) item_ID = 3, association_count = 3
              essential = 0, property_index = 5;
              essential = 0, property_index = 6;
              essential = 0, property_index = 10;
          4) item_ID = 4, association_count = 3
              essential = 0, property_index = 7;
              essential = 0, property_index = 8;
              essential = 0, property_index = 11;
          5) item_ID = 100, association_count = 1
              essential = 0, proeperty_index = 9
              MediaDataBox 'mdat' or 'idat':
   HEVC Image (at file offset X, with length Y)
```

Associating other Items with a region

In an embodiment, an item (no matter its type) may be associated with a region of a first image. This association may be realized directly from the item to the region, or indirectly by associating an entity group containing the item to the region. The region may be described by a region annotation item or by a region annotation item property. An item or an entity group may be associated with a region annotation item through an entry of an 'iref' box.

For example, an image item or an entity group may be associated with a region annotation item through an item reference box of type 'eroi' (for "encoded region of interest"). The reference type 'eroi' is an example, and other reference types may be used, such as 'rgim'.

The association can be oriented from the region annotation item to the image item (or to the entity group), or from the image item (or from the entity group) to the region annotation item.

Alternatively, an item (or an entity group) may be associated with a region annotation item property through a new item property box associated with the region annotation item property and referencing this item (or entity group). This new item property box may be an entry of an 'iref' box. This new item property box may contain a reference type, a reference count and a list of referenced item identifiers.

In a variant, an image item named "ROI image item" may be associated with a region annotation item or with a region annotation item property for providing an alternative or complementary content for the region. The ROI image item may have a higher resolution than the first image, or may have a higher quality than the first image. Or the ROI image item may also correspond to a field of view different from the one of the first image.

For example, if the first image is a photo of Notre Dame de Paris and of its surroundings during the 2019 fire, the region corresponds to Notre Dame de Paris itself, and the ROI image item may be a photo of Notre Dame de Paris before the fire.

In another variant, an entity group named "ROI entity group", may be associated with a region annotation item or with a region annotation item property for providing a set of alternative contents for the region. The corresponding entity group box may be of type 'altr'.

For example, the ROI entity group may comprise a first image with a higher resolution representation of the region, a second image with a higher quality representation of the region, and a third image with an HDR representation of the region.

Other examples of items that may be associated directly or as part of an entity group to a region through a region annotation item or a region annotation item property are: a depth map for the region, a thumbnail for the region, and/or quality or resolution refinement layers for the region.

When an image (named "second image" in the following) is associated, either directly or through a group, to a region of a first image, the precise localisation of the second image relative to the first image may depend on the geometry of the region. If the region is a point, then the centre of the second image is located at this point of the first image. If the region is a rectangle, then the second image may fill this rectangle inside the first image. Otherwise, the second image may fill the bounding box of the region.

In an embodiment, the precise localisation of the second image relative to the first image may be refined by using item properties associated to the region. If the region is a point, an offset for the centre of the second image and the width and height of the second image may be specified. If the region is a rectangle, an offset from the top-left corner of the rectangle and the width and height of the second image may be specified. Otherwise, if the region is neither a point nor a rectangle, an offset from the top-left corner of the bounding box and the width and height of the second image may be specified. These offsets, width and height may be specified using a new item property, or several new item properties. Alternatively, they may also be specified using the 'rloc' and/or 'iscl' item properties.

In an embodiment, the second image may be larger than the region of the first image, and then only a part of the second image may correspond to the region. This configuration may be indicated with a specific item property (e.g., 'clap') associated to the image item or to the entity group containing the image item. This configuration may be indicated with a new item property associated with the region annotation item or with the region annotation item property.

### Misc alternatives

Possibly, after step **790** of the process illustrated by **Figure 7****,** the transformative properties associated with the image item are extracted. Then, they are applied according to their ordering inside the 'ipma' entry to the annotated image item and to the geometries of its associated region annotation item properties. This application may be realized according to the process illustrated by **Figure 14****.**

Possibly, after step **1370** of the process illustrated by **Figure 7****,** the transformative properties associated with the image item are extracted. Then, they are applied according to their ordering inside the 'ipma' entry to the annotated image item and to the geometries of its associated region annotation items. This application may be realized according to the process illustrated by **Figure 14****.**

Possibly, region annotations are applied on the output image of the image item.

Possibly a region annotation may be associated with several image items. For example, the same region annotation may apply to several image items corresponding to an image burst.

Possibly a region annotation may be associated with several image items. In addition, a geometry modification item property is associated to each association to adapt the geometry of the region to each image item. The geometry modification item property may be associated to the region and/or to the region annotation and may contain an indication of the image item to which it applies. The geometry modification item property may be associated to the image item and may contain an indication of the region and/or of the region annotation to which it applies. For example, the same region annotation may be associated to several image items corresponding to a burst of images containing a moving object. The geometry modification item properties change the geometry of the region for fitting the moving object in each image item.

Possibly a region annotation may be associated with a group of items. This associated means that the region annotation applies to each item comprised in the group.

Possibly the reference between a region annotation item or a region group and an image item could be reversed. For example, the association between one or more region annotation items and an image item could use a reference of type 'rgan' from the image item to the one or more region annotation items.

Possibly a region annotation may be described by a new type of boxes. The structure of these boxes may be similar to the structure described for geometry item properties, location item properties and/or shape item properties. These boxes may have an identifier associated with them. These boxes may be associated with items inside the 'iref' box or inside a new box. These boxes may be associated with properties inside the 'ipma' box or inside a new box.

Finally, even though the embodiments have been described with reference to region annotation items, they may more generally apply to region items. The aim of a region item is to characterize the geometry of a region, not necessarily with associated annotations, but it may be used to associate any kind of object, such as an image, a video or a sound with a region of an image item.

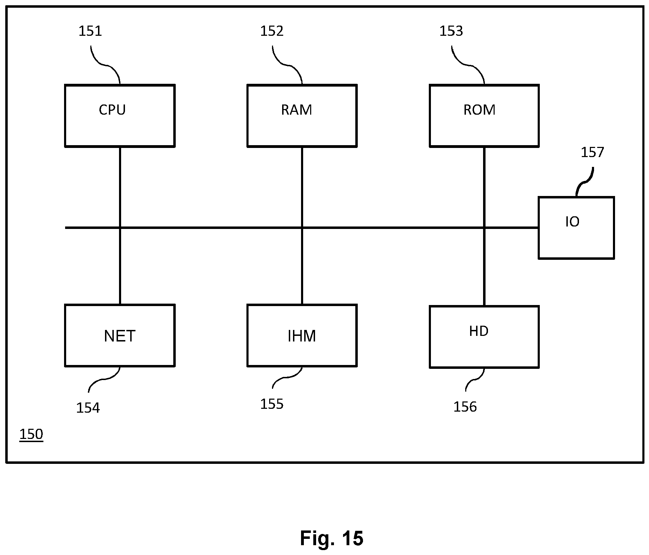

**Figure 15** is a schematic block diagram of a computing device **150** for implementation of one or more embodiments of the invention. The computing device **150** may be a device such as a microcomputer, a workstation or a light portable device. The computing device **150** comprises a communication bus connected to:
- a central processing unit **151,** such as a microprocessor, denoted CPU;
- a random access memory **152,** denoted RAM, for storing the executable code of the method of embodiments of the invention as well as the registers adapted to record variables and parameters necessary for implementing the method according to embodiments of the invention, the memory capacity thereof can be expanded by an optional RAM connected to an expansion port, for example;
- a read-only memory **153,** denoted ROM, for storing computer programs for implementing embodiments of the invention;
- a network interface **154** is typically connected to a communication network over which digital data to be processed are transmitted or received. The network interface **154** can be a single network interface, or composed of a set of different network interfaces (for instance wired and wireless interfaces, or different kinds of wired or wireless interfaces). Data packets are written to the network interface for transmission or are read from the network interface for reception under the control of the software application running in the CPU **151;**
- a user interface **155** may be used for receiving inputs from a user or to display information to a user;
- a hard disk **156** denoted HD may be provided as a mass storage device;
- an I/O module **157** may be used for receiving/sending data from/to external devices such as a video source or display.

The executable code may be stored either in read only memory **153,** on the hard disk **156** or on a removable digital medium such as for example a disk. According to a variant, the executable code of the programs can be received by means of a communication network, via the network interface **154,** in order to be stored in one of the storage means of the communication device **150,** such as the hard disk **156,** before being executed.

The central processing unit **151** is adapted to control and direct the execution of the instructions or portions of software code of the program or programs according to embodiments of the invention, which instructions are stored in one of the aforementioned storage means. After powering on, the CPU **151** is capable of executing instructions from main RAM memory **152** relating to a software application after those instructions have been loaded from the program ROM **153** or the hard disk (HD) **156** for example. Such a software application, when executed by the CPU **151,** causes the steps of the flowcharts of the invention to be performed.

Any step of the algorithms of the invention may be implemented in software by execution of a set of instructions or program by a programmable computing machine, such as a PC ("Personal Computer"), a DSP ("Digital Signal Processor") or a microcontroller; or else implemented in hardware by a machine or a dedicated component, such as an FPGA ("Field-Programmable Gate Array") or an ASIC ("Application-Specific Integrated Circuit").

Although the present invention has been described hereinabove with reference to specific embodiments, the present invention is not limited to the specific embodiments, and modifications will be apparent to a skilled person in the art which lie within the scope of the present invention.

Many further modifications and variations will suggest themselves to those versed in the art upon making reference to the foregoing illustrative embodiments, which are given by way of example only and which are not intended to limit the scope of the invention, that being determined solely by the appended claims. In particular the different features from different embodiments may be interchanged, where appropriate.

Each of the embodiments of the invention described above can be implemented solely or as a combination of a plurality of the embodiments. Also, features from different embodiments can be combined where necessary or where the combination of elements or features from individual embodiments in a single embodiment is beneficial.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used.

## Claims

1. A method of encapsulating an image (250) in an ISOBMFF-based media file (800), the method comprising:
- obtaining an image (250);
- generating an image item (810) representing the image (250);
- generating geometry descriptive data (821, 826) describing the geometry of a region (260, 261, 270, 280) of the image (250);
- generating a region item (820, 825) comprising the geometry descriptive data (821, 826), the region item (820, 825) being associated with the image item (810) by an item reference information (831, 832);
- generating at least one annotation data structure (861, 862) comprising data associated with the region of the image, the at least one annotation data structure being associated (851, 852) with the region item (820, 825);
- generating the media file (800) including the image (250), the image item (810), the region item (820, 825), and the at least one annotation data structure (861, 862),
wherein the region item is associated with the at least one generated annotation data structure by an association information in an association container.

2. The method of claim 1, wherein:
- the association container is an item property association box; and,
- the region item is associated with the at least one generated annotation data structure as item properties.

3. The method of claim 1, wherein:
- the association container is an item reference box; and,
- the region item is associated with the at least one generated annotation data structure as items.

4. The method of claim 1, wherein:
- the association container is an item reference box; and,
- the region item is associated with a grouping data structure, the grouping data structure referencing the at least one generated annotation data structure as items.

5. The method of claim 1, wherein:
- the region item is related to a plurality of regions of the image;
- the geometry descriptive data describes the geometry of each of the plurality of regions of the image; and
- the at least one annotation data structure is associated with at least one region of the plurality of regions of the image.

6. The method of claim 5, wherein:
- the at least one annotation data structure is associated with all regions of the plurality of regions of the image.

7. The method of claim 1, wherein:
- the geometry of the region of the image is a point, a 3d box or a rectangle or an ellipse or a sphere or a polygon or a polyline.

8. The method of claim 1, wherein:
- the geometry of the region of the image is a mask.

9. The method of claim 8, wherein:
- data of the mask is comprised in an image item associated with the region item by an item reference information.

10. The method of claim 1, wherein:
- at least one region item associated with the image item are grouped, the group is associated with the image item by an item reference information.

11. A method of reading an ISOBMFF-based media file, the method comprising:
- reading a region item comprising geometry descriptive data describing the geometry of a region of an image, the region item being associated with an image item representing the image by an item reference information;
- reading at least one annotation data structure associated with the region item, the at least one annotation data structure comprising data associated with the region of the image;
- reading the associated image item,
wherein the region item is associated with the at least one generated annotation data structure by an association information in an association container.

12. The method of claim 11, wherein:
- the association container is an item property association box; and,
- the region item is associated with the at least one generated annotation data structure as item properties.

13. The method of claim 11, wherein:
- the association container is an item reference box; and
- the region item is associated with the at least one annotation data structure generated as items.

14. A program for a programmable apparatus, the program comprising a sequence of instructions for implementing a method according to any one of claims 1 to 13, when loaded into and executed by the programmable apparatus.

15. A computer-readable storage medium storing instructions of a computer program for implementing a method according to any one of claims 1 to 13.

16. A device for encapsulating an image (250) in an ISOBMFF-based media file, the device comprising a processor configured for:
- obtaining an image (250);
- generating an image item (810) representing the image (250);
- generating geometry descriptive data (821, 826) describing the geometry of a region (260, 261, 270, 280) of the image (250);
- generating a region item (820, 825) comprising the geometry descriptive data (821, 826), the region item (820, 825) being associated with the image item (810) by an item reference information (831, 832);
- generating at least one annotation data structure (861, 862) comprising data associated with the region of the image, the at least one annotation data structure being associated (851, 852) with the region item (820, 825);
- generating the media file (800) including the image (250), the image item (810), the region item (820, 825), and the at least one annotation data structure (861, 862),
wherein the region item is associated with the at least one generated annotation data structure by an association information in an association container.

17. A device for reading an ISOBMFF-based media file, the device comprising a processor configured for:
- reading a region item comprising geometry descriptive data describing the geometry of a region of an image, the region item being associated with an image item representing the image by an item reference information;
- reading at least one annotation data structure associated with the region item, the at least one annotation data structure comprising data associated with the region of the image;
- reading the associated image item,
wherein the region item is associated with the at least one generated annotation data structure by an association information in an association container.

18. The method of claim 6, wherein the region item includes count information indicating the number of the plurality of regions in the image.

19. The method of claim 1, wherein the at least one annotation data structure is an item property box included in an item property container box ('ipco'), and wherein the region item is associated with one or more item properties (861, 862) in the item property container box using an item property association box ('ipma').

20. The method of claim 1, wherein:
a first annotation data structure (861) comprising first data associated with a first region in the image (250) and a second annotation data structure (862) comprising second data associated with a second region in the image (250) are generated, and
the media file including the first annotation data structure and the second annotation data structure is generated.

21. The method of claim 20, wherein:
first geometry descriptive data (821) of the first region (261) and second geometry descriptive data (826) of the second region (270) are generated,
a first region item (820) comprising the first geometry descriptive data (821) and a second region item (825) comprising the second geometry descriptive data (826) are generated, and
the media file including the first region item (820) associated with the first annotation data structure (861) and the second region item (825) associated with the second annotation data structure (862), is generated.

## Patentansprüche

1. Verfahren zum Einkapseln eines Bildes (250) in eine ISOBMFF-basierte Mediendatei (800), wobei das Verfahren aufweist:
- Erhalten eines Bildes (250);
- Erzeugen eines Bildelements (810), das das Bild (250) darstellt;
- Erzeugen von Geometrie beschreibenden Daten (821, 826), die die Geometrie eines Bereichs (260, 261, 270, 280) des Bildes (250) beschreiben;
- Erzeugen eines Bereichselements (820, 825), das die Geometrie beschreibenden Daten (821, 826) aufweist, wobei das Bereichselement (820, 825) mit dem Bildelement (810) durch eine Elementreferenzinformation (831, 832) verknüpft ist;
- Erzeugen mindestens einer Anmerkungsdatenstruktur (861, 862), die Daten aufweist, die mit dem Bereich des Bildes verknüpft sind, wobei die mindestens eine Anmerkungsdatenstruktur mit dem Bereichselement (820, 825) verknüpft ist (851, 852);
- Erzeugen der Mediendatei (800), die das Bild (250), das Bildelement (810), das Bereichselement (820, 825) und die mindestens eine Anmerkungsdatenstruktur (861, 862) umfasst,
wobei das Bereichselement mit der mindestens einen erzeugten Anmerkungsdatenstruktur durch eine Verknüpfungsinformation in einem Verknüpfungsbehälter verknüpft ist.

2. Verfahren gemäß Anspruch 1, wobei:
- der Verknüpfungsbehälter eine Elementeigenschafts-Verknüpfungsbox ist; und
- das Bereichselement mit der mindestens einen erzeugten Anmerkungsdatenstruktur als Elementeigenschaften verknüpft ist.

3. Verfahren gemäß Anspruch 1, wobei:
- der Verknüpfungsbehälter eine Elementreferenzbox ist; und
- das Bereichselement mit der mindestens einen erzeugten Anmerkungsdatenstruktur als Elemente verknüpft ist.

4. Verfahren gemäß Anspruch 1, wobei:
- der Verknüpfungsbehälter eine Elementreferenzbox ist; und
- das Bereichselement mit einer Gruppierungsdatenstruktur verknüpft ist, wobei die Gruppierungsdatenstruktur auf die mindestens eine erzeugte Anmerkungsdatenstruktur als Elemente Bezug nimmt.

5. Verfahren gemäß Anspruch 1, wobei:
- sich das Bereichselement auf eine Vielzahl von Bereichen des Bildes bezieht;
- die Geometrie beschreibenden Daten die Geometrie jedes der Vielzahl von Bereichen des Bildes beschreiben; und
- die mindestens eine Anmerkungsdatenstruktur mit mindestens einem Bereich der Vielzahl von Bereichen des Bildes verknüpft ist.

6. Verfahren gemäß Anspruch 5, wobei:
- die mindestens eine Anmerkungsdatenstruktur mit allen Bereichen der Vielzahl von Bereichen des Bildes verknüpft ist.

7. Verfahren gemäß Anspruch 1, wobei:
- die Geometrie des Bereichs des Bildes ein Punkt, eine 3D-Box oder ein Rechteck oder eine Ellipse oder eine Kugel oder ein Polygon oder eine Polylinie ist.

8. Verfahren gemäß Anspruch 1, wobei
- die Geometrie des Bereichs des Bildes eine Maske ist.

9. Verfahren gemäß Anspruch 8, wobei
- Daten der Maske in einem Bildelement umfasst sind, das mit dem Bereichselement durch eine Elementreferenzinformation verknüpft ist.

10. Verfahren gemäß Anspruch 1, wobei:
- mindestens ein Bereichselement, das mit dem Bildelement verknüpft ist, gruppiert wird, wobei die Gruppe mit dem Bildelement durch eine Elementreferenzinformation verknüpft ist.

11. Verfahren zum Lesen einer ISOBMFF-basierten Mediendatei, wobei das Verfahren aufweist:
- Lesen eines Bereichselements, das Geometrie beschreibende Daten aufweist, die die Geometrie eines Bereichs eines Bildes beschreiben, wobei das Bereichselement mit einem Bildelement, das das Bild darstellt, durch eine Elementreferenzinformation verknüpft ist;
- Lesen mindestens einer Anmerkungsdatenstruktur, die mit dem Bereichselement verknüpft ist, wobei die mindestens eine Anmerkungsdatenstruktur Daten aufweist, die mit dem Bereich des Bildes verknüpft sind;
- Lesen des verknüpften Bildelements,
wobei das Bereichselement mit der mindestens einen erzeugten Anmerkungsdatenstruktur durch eine Verknüpfungsinformation in einem Verknüpfungsbehälter verknüpft ist.

12. Verfahren gemäß Anspruch 11, wobei:
- der Verknüpfungsbehälter eine Elementeigenschafts-Verknüpfungsbox ist; und
- das Bereichselement mit der mindestens einen erzeugten Anmerkungsdatenstruktur als Elementeigenschaften verknüpft ist.

13. Verfahren gemäß Anspruch 11, wobei:
- der Verknüpfungsbehälter eine Elementreferenzbox ist; und
- das Bereichselement mit der mindestens einen Anmerkungsdatenstruktur verknüpft ist, die als Elemente erzeugt wird.

14. Programm für eine programmierbare Vorrichtung, wobei das Programm eine Folge von Anweisungen zum Implementieren eines Verfahrens gemäß einem der Ansprüche 1 bis 13 aufweist, wenn es in die programmierbare Vorrichtung geladen und von dieser ausgeführt wird.

15. Computerlesbares Speichermedium, das Anweisungen eines Computerprogramms zum Implementieren eines Verfahrens gemäß einem der Ansprüche 1 bis 13 speichert.

16. Einrichtung zum Einkapseln eines Bildes (250) in eine ISOBMFF-basierte Mediendatei, wobei die Einrichtung einen Prozessor aufweist, der konfiguriert ist zum:
- Erhalten eines Bildes (250);
- Erzeugen eines Bildelements (810), das das Bild (250) darstellt;
- Erzeugen von Geometrie beschreibenden Daten (821, 826), die die Geometrie eines Bereichs (260, 261, 270, 280) des Bildes (250) beschreiben;
- Erzeugen eines Bereichselements (820, 825), das die Geometrie beschreibenden Daten (821, 826) aufweist, wobei das Bereichselement (820, 825) mit dem Bildelement (810) durch eine Elementreferenzinformation (831, 832) verknüpft ist;
- Erzeugen mindestens einer Anmerkungsdatenstruktur (861, 862), die Daten aufweist, die mit dem Bereich des Bildes verknüpft sind, wobei die mindestens eine Anmerkungsdatenstruktur mit dem Bereichselement (820, 825) verknüpft ist (851, 852);
- Erzeugen der Mediendatei (800), die das Bild (250), das Bildelement (810), das Bereichselement (820, 825) und die mindestens eine Anmerkungsdatenstruktur (861, 862) umfasst,
wobei das Bereichselement mit der mindestens einen erzeugten Anmerkungsdatenstruktur durch eine Verknüpfungsinformation in einem Verknüpfungsbehälter verknüpft ist.

17. Einrichtung zum Lesen einer ISOBMFF-basierten Mediendatei, wobei die Einrichtung einen Prozessor aufweist, der konfiguriert ist zum:
- Lesen eines Bereichselements, das Geometrie beschreibende Daten aufweist, die die Geometrie eines Bereichs eines Bildes beschreiben, wobei das Bereichselement mit einem Bildelement, das das Bild darstellt, durch eine Elementreferenzinformation verknüpft ist;
- Lesen mindestens einer Anmerkungsdatenstruktur, die mit dem Bereichselement verknüpft ist, wobei die mindestens eine Anmerkungsdatenstruktur Daten aufweist, die mit dem Bereich des Bildes verknüpft sind;
- Lesen des verknüpften Bildelements,
wobei das Bereichselement mit der mindestens einen erzeugten Anmerkungsdatenstruktur durch eine Verknüpfungsinformation in einem Verknüpfungsbehälter verknüpft ist.

18. Verfahren gemäß Anspruch 6, wobei das Bereichselement Zählinformationen umfasst, die die Anzahl der Vielzahl von Bereichen in dem Bild angeben.

19. Verfahren gemäß Anspruch 1, wobei die mindestens eine Anmerkungsdatenstruktur eine Elementeigenschaftsbox ist, die in einer Elementeigenschafts-Behälterbox ("ipco") umfasst ist, und
wobei das Bereichselement mit einer oder mehreren Elementeigenschaften (861, 862) in der Elementeigenschafts-Behälterbox unter Verwendung einer Elementeigenschafts-Verknüpfungsbox ("ipma") verknüpft ist.

20. Verfahren gemäß Anspruch 1, wobei:
eine erste Anmerkungsdatenstruktur (861), die erste Daten aufweist, die mit einem ersten Bereich in dem Bild (250) verknüpft sind, und eine zweite Anmerkungsdatenstruktur (862), die zweite Daten aufweist, die mit einem zweiten Bereich in dem Bild (250) verknüpft sind, erzeugt werden und
die Mediendatei, die die erste Anmerkungsdatenstruktur und die zweite Anmerkungsdatenstruktur umfasst, erzeugt wird.

21. Verfahren gemäß Anspruch 20, wobei:
erste Geometrie beschreibende Daten (821) des ersten Bereichs (261) und zweite Geometrie beschreibende Daten (826) des zweiten Bereichs (270) erzeugt werden,
ein erstes Bereichselement (820), das die ersten Geometrie beschreibenden Daten (821) aufweist, und ein zweites Bereichselement (825), das die zweiten Geometrie beschreibenden Daten (826) aufweist, erzeugt werden, und
die Mediendatei, die das erste Bereichselement (820), das mit der ersten Anmerkungsdatenstruktur (861) verknüpft ist, und das zweite Bereichselement (825), das mit der zweiten Anmerkungsdatenstruktur (862) verknüpft ist, umfasst, erzeugt wird.

## Revendications

1. Procédé d'encapsulation d'une image (250) dans un fichier multimédia (800) basé sur l'ISOBMFF, le procédé comprenant :
- l'obtention d'une image (250) ;
- la génération d'un élément d'image (810) représentant **l'image** (250) ;
- la génération de données descriptives de géométrie (821, 826) décrivant la géométrie d'une région (260, 261, 270, 280) de **l'image** (250) ;
- la génération d'un élément de région (820, 825) comprenant les données descriptives de géométrie (821, 826), l'élément de région (820, 825) étant associé à l'élément d'image (810) par une information de référence d'élément (831, 832) ;
- la génération d'au moins une structure de données d'annotation (861, 862) comprenant des données associées à la région de l'image, l'au moins une structure de données d'annotation étant associée (851, 852) à l'élément de région (820, 825) ;
- la génération du fichier multimédia (800) comportant l'image (250), l'élément d'image (810), l'élément de région (820, 825) et l'au moins une structure de données d'annotation (861, 862),
dans lequel l'élément de région est associé à l'au moins une structure de données d'annotation générée par une information d'association dans un conteneur d'association.

2. Procédé selon la revendication 1, dans lequel :
- le conteneur d'association est une boîte d'association de propriétés d'élément ; et,
- l'élément de région est associé à l'au moins une structure de données d'annotation générée en tant que propriétés d'élément.

3. Procédé selon la revendication 1, dans lequel :
- le conteneur d'association est une boîte de référence d'élément ; et,
- l'élément de région est associé à l'au moins une structure de données d'annotation générée en tant qu'éléments.

4. Procédé selon la revendication 1, dans lequel :
- le conteneur d'association est une boîte de référence d'élément ; et,
- l'élément de région est associé à une structure de données de regroupement, la structure de données de regroupement référençant l'au moins une structure de données d'annotation générée en tant qu'éléments.

5. Procédé selon la revendication 1, dans lequel :
- l'élément de région est lié à une pluralité de régions de l'image ;
- les données descriptives de géométrie décrivent la géométrie de chacune de la pluralité de régions de l'image ; et
- l'au moins une structure de données d'annotation est associée à au moins une région de la pluralité de régions de l'image.

6. Procédé selon la revendication 5, dans lequel :
- l'au moins une structure de données d'annotation est associée à toutes les régions de la pluralité de régions de l'image.

7. Procédé selon la revendication 1, dans lequel :
- la géométrie de la région de l'image est un point, une boîte 3D ou un rectangle ou une ellipse ou une sphère ou un polygone ou une polyligne.

8. Procédé selon la revendication 1, dans lequel :
- la géométrie de la région de l'image est un masque.

9. Procédé selon la revendication 8, dans lequel :
- les données du masque sont comprises dans un élément d'image associé à l'élément de région par une information de référence d'élément.

10. Procédé selon la revendication 1, dans lequel :
- au moins un élément de région associé à l'élément d'image est regroupé, le groupe est associé à l'élément d'image par une information de référence d'élément.

11. Procédé de lecture d'un fichier multimédia basé sur l'ISOBMFF, le procédé comprenant :
- la lecture d'un élément de région comprenant des données descriptives de géométrie décrivant la géométrie d'une région d'une image, l'élément de région étant associé à un élément d'image représentant l'image par une information de référence d'élément ;
- la lecture d'au moins une structure de données d'annotation associée à l'élément de région, l'au moins une structure de données d'annotation comprenant des données associées à la région de l'image ;
- la lecture de l'élément d'image associé,
dans lequel l'élément de région est associé à l'au moins une structure de données d'annotation générée par une information d'association dans un conteneur d'association.

12. Procédé selon la revendication 11, dans lequel :
- le conteneur d'association est une boîte d'association de propriétés d'élément ; et,
- l'élément de région est associé à l'au moins une structure de données d'annotation générée en tant que propriétés d'élément.

13. Procédé selon la revendication 11, dans lequel :
- le conteneur d'association est une boîte de référence d'élément ; et
- l'élément de région est associé à l'au moins une structure de données d'annotation générée en tant qu'éléments.

14. Programme pour un appareil programmable, le programme comprenant une séquence d'instructions pour mettre en œuvre un procédé selon l'une quelconque des revendications 1 à 13, lorsqu'il est chargé dans et exécuté par l'appareil programmable.

15. Support de stockage lisible par ordinateur stockant des instructions d'un programme informatique pour mettre en œuvre un procédé selon l'une quelconque des revendications 1 à 13.

16. Dispositif pour encapsuler une image (250) dans un fichier multimédia basé sur l'ISOBMFF, le dispositif comprenant un processeur configuré pour :
- obtenir une image (250) ;
- générer un élément d'image (810) représentant l'image (250) ;
- générer des données descriptives de géométrie (821, 826) décrivant la géométrie d'une région (260, 261, 270, 280) de l'image (250) ;
- générer un élément de région (820, 825) comprenant les données descriptives de géométrie (821, 826), l'élément de région (820, 825) étant associé à l'élément d'image (810) par une information de référence d'élément (831, 832) ;
- générer au moins une structure de données d'annotation (861, 862) comprenant des données associées à la région de l'image, l'au moins une structure de données d'annotation étant associée (851, 852) à l'élément de région (820, 825) ;
- générer le fichier multimédia (800) comportant l'image (250), l'élément d'image (810), l'élément de région (820, 825) et l'au moins une structure de données d'annotation (861, 862),
dans lequel l'élément de région est associé à l'au moins une structure de données d'annotation générée par une information d'association dans un conteneur d'association.

17. Dispositif pour lire un fichier multimédia basé sur l'ISOBMFF, le dispositif comprenant un processeur configuré pour :
- lire un élément de région comprenant des données descriptives de géométrie décrivant la géométrie d'une région d'une image, l'élément de région étant associé à un élément d'image représentant l'image par une information de référence d'élément ;
- lire au moins une structure de données d'annotation associée à l'élément de région, l'au moins une structure de données d'annotation comprenant des données associées à la région de l'image ;
- lire l'élément d'image associé,
dans lequel l'élément de région est associé à l'au moins une structure de données d'annotation générée par une information d'association dans un conteneur d'association.

18. Procédé selon la revendication 6, dans lequel l'élément de région comporte des informations de comptage indiquant le nombre de la pluralité de régions dans l'image.

19. Procédé selon la revendication 1, dans lequel l'au moins une structure de données d'annotation est une boîte de propriétés d'élément comprise dans une boîte de conteneur de propriétés d'élément (« ipco »), et dans lequel l'élément de région est associé à une ou plusieurs propriétés d'élément (861, 862) dans la boîte de conteneur de propriétés d'élément en utilisant une boîte d'association de propriétés d'élément (« ipma »).

20. Procédé selon la revendication 1, dans lequel :
une première structure de données d'annotation (861) comprenant des premières données associées à une première région dans **l'image** (250) et une seconde structure de données d'annotation (862) comprenant des secondes données associées à une seconde région dans **l'image** (250) sont générées, et
le fichier multimédia comportant la première structure de données d'annotation et la seconde structure de données d'annotation est généré.

21. Procédé selon la revendication 20, dans lequel :
des premières données descriptives de géométrie (821) de la première région (261) et des secondes données descriptives de géométrie (826) de la seconde région (270) sont générées, un premier élément de région (820) comprenant les premières données descriptives de géométrie (821) et un second élément de région (825) comprenant les secondes données descriptives de géométrie (826) sont générés, et
le fichier multimédia comportant le premier élément de région (820) associé à la première structure de données d'annotation (861) et le second élément de région (825) associé à la seconde structure de données d'annotation (862) est généré.
